# EUROPÄISCHE PATENTANMELDUNG

(11) **EP 2 085 296 A1**
(43) Veröffentlichungstag der Anmeldung: **05.08.2009**
(21) Anmeldenummer: 08020678.2
(22) Anmeldetag: 28.11.2008
(51) Int. Cl.: B62D 25/00, B21C 37/00, B21D 49/00

(54) **Karosseriebauteil, Fahrzeuge und Verfahren zur Herstellung eines Karosseriebauteils**

(30) Priorität: 29.01.2008 DE 102008006619
(71) Anmelder: Benteler Automobiltechnik GmbH, 33104 Paderborn (DE)
(72) Erfinder: Zuber, Armin, Dr., 33175 Bad Lippspringe (DE)
(74) Vertreter: Ksoll, Peter

(57) **Zusammenfassung**

Die Erfindung betrifft ein Karosseriebauteil (6), insbesondere einen Träger für ein landgestütztes Fahrzeug, das ein Rohr (7) umfasst mit einer die Rohrwand (12) zweimal durchstoßenden Querbohrung (8). In der Querbohrung (8) ist ein Zugelement (11) angeordnet. Das Zugelement (11) ist an seinen Enden (11 a, 11b) mit der Rohrwand (12) verbunden. Das Karosseriebauteil (6) kann in ein Fahrzeug eingebaut sein, wobei das Rohr (7) in einer Längsrichtung oder einer Querrichtung des Fahrzeugs ausgerichtet ist.

Weiterhin betrifft die Erfindung ein Verfahren zur Herstellung eines Karosseriebauteils (6) mit den folgenden Schritten: Bereitstellen eines Rohrs (7), Bohren einer Querbohrung (8) in das Rohr (7), Einfädeln eines Zugelements (11) in die Querbohrung (8) und Herstellen einer Verbindung an einem Ende (11a, 11 b) des Zugelements.

## Beschreibung

Die Erfindung betrifft ein Karosseriebauteil gemäß Patentanspruch 1, Fahrzeuge gemäß den Patentansprüchen 12 und 13 sowie ein Verfahren zur Herstellung eines Karosseriebauteils gemäß Patentanspruch 15.

Karosseriebauteile sind im Stand der Technik in vielfältigen Ausführungsformen bekannt. Sie können eine tragende oder nicht-tragende Funktion haben. Bei der Konstruktion von Karosseriebauteilen ist insbesondere deren Verformungsverhalten im Crashfall ein Punkt, dem besondere Beachtung geschenkt wird. Ein Karosseriebauteil kann entweder so gestaltet werden, dass es im Crashfall eine hohe Formstabilität aufweist oder aber durch gezielte Verformung ein hohes Maß an Aufprallenergie aufnimmt.

Beispielsweise ist es bekannt, so genannte Tailored Tubes zu verwenden. Dabei handelt es sich um konventionelle Rohre mit angepassten Wandstärken. Nachteilig an diesen Tailored Tubes ist, dass die Formstabilität teilweise zu Wünschen übrig lässt. Der Einsatz hochfester Stähle erlaubt zwar eine Reduzierung der Wandstärke und somit eine Gewichtsreduzierung, führt aber zu einer geringeren Steifigkeit. Die geringe Steifigkeit ist insbesondere auf das ungünstigere Beulverhalten dünnwandiger Querschnitte zurückzuführen.

Der Erfindung liegt ausgehend vom Stand der Technik die Aufgabe zugrunde, ein Karosseriebauteil bereitzustellen, das im Crashfall besonders formstabil ist, und Fahrzeuge mit einem solchen Karosseriebauteil sowie ein Verfahren zur Herstellung eines solchen Karosseriebauteils aufzuzeigen.

Die Lösung des ersten Teils der Aufgabe besteht in einem Karosseriebauteil mit den Merkmalen von Patentanspruch 1. Vorteilhafte Ausführungsformen und Weiterbildungen des Erfindungsgedankens gehen aus den von Patentanspruch 1 abhängigen Unteransprüchen hervor.

Gemäß Patentanspruch 1 umfasst das Karosseriebauteil, das insbesondere ein Träger für ein landgestützes Fahrzeug ist, ein Rohr mit einer die Rohrwand zweimal durchstoßenden Querbohrung. In der Querbohrung ist ein Zugelement angeordnet. Das Zugelement ist an seinen Enden mit der Rohrwand verbunden.

Das erfindungsgemäße Rohrbauteil ist im Crashfall besonders formstabil. Bei Stauchungen des Rohrs in einer Querrichtung des Zugelements wird die Rohrwand im Bereich der Querbohrung radial nach außen verschoben und das Zugelement auf Zug belastet. Dadurch übt das Zugelement eine Gegenkraft auf die Rohrwand aus. Auf diese Weise wirkt das Zugelement der weiteren Verlagerung der Rohrwand im Bereich der Querbohrung entgegen und erhöht somit die Formstabilität des Rohres.

Vorzugsweise sind mehrere Querbohrungen mit Abstand zueinander im Rohr vorgesehen, in denen jeweils ein Zugelement angeordnet ist. Wenn mehrere Zugelemente im Rohr angeordnet sind, können diese in ihrer Ausrichtung um einen Winkel gedreht im Rohr angeordnet sein.

Gemäß einer vorteilhaften Ausführungsform ist das Zugelement ein Stab. Der Stab kann verschiedene Querschnittsformen haben, wobei sich Kreisquerschnitte besonders bewährt haben, da sie eine große Anlagefläche des Stabes an die Rohrwand in der Querbohrung aufweisen. Quadratische, rechteckige oder andere polygonale Querschnittsformen sind ebenfalls vorstellbar.

Besonders vorteilhaft ist es, wenn das Zugelement vorgespannt ist. Durch die Vorspannung wird einer Verformung des Rohrs im Crashfall besonders effektiv entgegengewirkt, da es kein Spiel gibt. Bei jeder radialen Verlagerung der Rohrwand nach außen wirkt das Zugelement unmittelbar entgegen.

In einer Ausführungsform ist vorgesehen, dass das Zugelement zumindest abschnittsweise hohl ist. Es wurde festgestellt, dass ein hohles Zugelement ebenfalls eine ausreichende Festigkeit aufweist. Die Vorteile eines (teilweise) hohlen Bauteils liegen im geringeren Gewicht des Zugelements und seiner leichteren Verformbarkeit bei der Herstellung der Verbindung mit der Rohrwand.

Um das Zugelement mit der Rohrwand zu verbinden, ist eine kraft-, form- oder stoffschlüssige Verbindung erforderlich. Mehrere Verbindungsmöglichkeiten haben sich als besonders geeignet erwiesen. Zum einen kann das Zugelement an einem Ende eine Verbreiterung aufweisen, beispielsweise in Form eines Kopfes. Gemäß einer weiteren Ausführungsform weist das Zugelement an einem Ende eine Schraubverbindung auf. Möglich ist auch, dass das Zugelement eine Nietverbindung aufweist. Aus herstellungstechnischer Sicht besonders interessant ist es, wenn das Zugelement an einem Ende eine Druckhülsenverbindung aufweist. Eine weitere Möglichkeit besteht darin, dass das Zugelement an einem Ende eine Schließringbolzenverbindung aufweist. Auch ist es vorstellbar, dass das Zugelement an einem Ende mit der Rohrwand verschweißt und/oder verklebt ist, um eine stoffschlüssige Verbindung herzustellen. Eine kraftschlüssige Verbindung wird vorteilhaft geschaffen, wenn das Zugelement ein Spannstift ist, der in die Querbohrung eingeschlagen ist.

Die einzelnen Komponenten des Karosseriebauteils können aus hochfesten Stählen hergestellt sein.

Gemäß einer vorteilhaften Weiterbildung des Gegenstandes der Erfindung ist das Karosseriebauteil gemäß Patentanspruch 12 in ein Fahrzeug eingebaut, wobei das Rohr in der Längsrichtung des Fahrzeugs ausgerichtet ist. Bei dem Karosseriebauteil kann es sich in diesem Fall insbesondere um eine Crashbox, ein Crashelement, einen Längsträger oder einen Subframe handeln. Bei diesem Karosseriebauteil wird das Rohr im Crashfall in Längsrichtung gestaucht und neigt dazu, entweder zu knicken oder zu beulen. Beiden Alternativen wirken die Zugelemente entgegen. Vorzugsweise ist das Zugelement an einer Stelle angeordnet, an der im Voraus berechnet wurde, dass das Rohr im Falle einer Längsstauchung nach außen beult.

Das Fahrzeug kann weiterhin mit einem Karosseriebauteil ausgestattet sein, dass in einer Querrichtung des Fahrzeugs ausgerichtet ist, vgl. Patentanspruch 13. Hierbei wird insbesondere an Stoßfängerquerträger (Bumper), Crashelemente, Karosseriequerträger und Instrumententafelträger gedacht.

Besonders vorteilhaft ist es, wenn das Zugelement parallel zur Fahrzeughochachse ausgerichtet ist. In diesem Fall ist zu erwarten, dass das Zugelement sowohl bei Crashs in Längsrichtung, einer Querrichtung oder einer Kombination aus diesen Richtungen seinen formstabilisierenden Einfluß auf das Rohr ausübt.

Weiterhin wird durch Patentanspruch 15 ein Verfahren zur Herstellung des Karosseriebauteils beansprucht. Das Verfahren besteht aus den Schritten Bereitstellen eines Rohres, Bohren einer Querbohrung in das Rohr, Einfädeln eines Zugelements in die Querbohrung und Herstellen einer Verbindung an einem Ende des Zugelements.

Vorteilhafte Weiterbildungsformen des Verfahrens gehen aus den von Patentanspruch 15 abhängigen Unteransprüchen hervor.

Es ist vorgesehen, dass zum Einfädeln des Zugelements eine Positionierhilfe verwendet wird. Die Positionierhilfe erleichtert und beschleunigt das Einfädeln des Zugelements.

Weiterhin kann das Zugelement vor oder bei dem Herstellen der endseitigen Verbindung vorgespannt werden.

Je nach Art der Verbindung, die hergestellt werden soll, ist es vorteilhaft, wenn eine Haltevorrichtung verwendet wird, die auf ein gegenüberliegendes Ende des Zugelements aufgesetzt wird. Die Haltevorrichtung kann insbesondere eine Gegenhaltevorrichtung sein.

Die Erfindung wird nachfolgend anhand von in den Zeichnungen dargestellten Ausführungsbeispielen näher erläutert. Es zeigen:
- Figuren 1 bis 3: Prinzipskizzen zur Erläuterung des Hintergrundes der Erfindung;
- Figuren 4 bis 6: Karosseriebauteile mit mehreren eingebauten Zugelementen;
- Figur 7: ein erfindungsgemäße Karosseriebauteil in der abstraktesten Form;
- Figuren 8 bis 9: Karosseriebauteile mit Schraubverbindungen;
- Figuren 10 bis 14: Darstellungen zur Erläuterung der Verfahrensschritte zur Herstellung eines Karosseriebauteils mit einem vernieteten Zugelement;
- Figuren 15 bis 20: Darstellungen zur Erläuterung der Verfahrensschritte zur Herstellung eines Karosseriebauteils mit einem Halbhohlniet;
- Figur 21: ein Karosseriebauteil mit Halbhohlniet;
- Figur 22: ein Karosseriebauteil mit verschweißtem Zugelement;
- Figuren 23 bis 26: Darstellungen zur Erläuterung der Verfahrensschritte zur Herstellung eines Karosseriebauteils mit einem Zugelement in Form eines Spannstiftes;
- Figuren 27 bis 30: Darstellungen zur Erläuterung der Verfahrensschritte zur Herstellung eines Karosseriebauteils mit einem Zugelement in Form eines Blindniets;
- Figuren 31 bis 34: Darstellungen zur Erläuterung der Verfahrensschritte zur Herstellung eines Karosseriebauteils mit einem Zugelement in Form eines Blindniets gemäß einem alternativen Herstellungsverfahren;
- Figuren 35 bis 40: Darstellungen zur Erläuterung der Verfahrensschritte zur Herstellung eines Karosseriebauteils mit einer Druckhülsenverbindung;
- Figuren 41 bis 46: Darstellungen zur Erläuterung der Verfahrensschritte zur Herstellung eines Karosseriebauteils mit einer Gewindehülsenverbindung und
- Figuren 47 bis 52: Darstellungen zur Erläuterung der Verfahrensschritte zur Herstellung eines Karosseriebauteils mit einer Schließringbolzenverbindung.

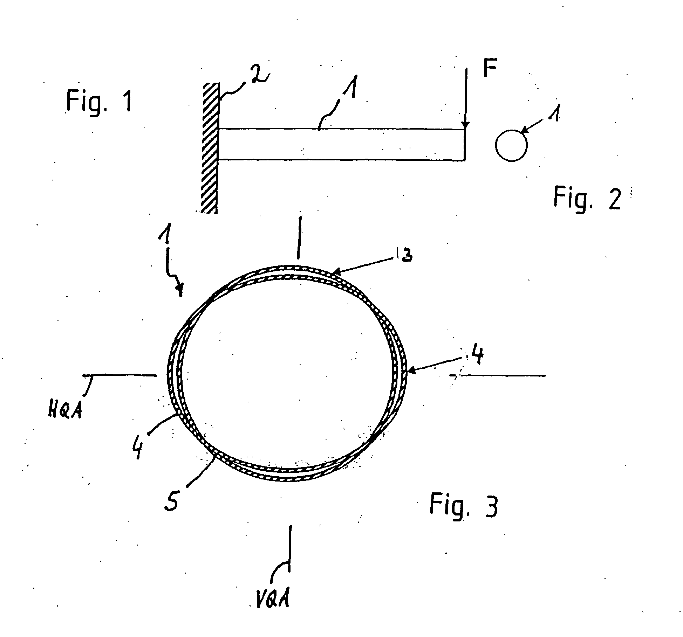

In Figur 1 ist ein Rohr 1 in einer Seitenansicht dargestellt, das an einem Ende in eine Wand 2 eingespannt ist. Auf das freie Ende des Rohr 1 wirkt in vertikaler Richtung nach unten eine Kraft F, die das Rohr 1 verformt. Der Querschnitt des Rohres 1 ist in Figur 2 dargestellt. In Figur 3 sieht man die Auswirkung der Krafteinwirkung. Ursprünglich hatte das Rohr 1 einen runden Ausgangsquerschnitt 3. Unter der Belastung hat sich das Rohr 1 verformt und eine elliptische Form 4 angenommen. Insbesondere hat sich die Rohrwand 5 im Bereich der vertikalen Querachse VQA radial nach innen verlagert, während die Rohrwand 5 in der horizontalen Querachse HQA sich radial nach außen verlagert hat.

In den folgenden Figuren sind erfindungsgemäße Karosseriebauteile 6, insbesondere Träger für landgestützte Fahrzeuge dargestellt, die jeweils ein Rohr 7 umfassen. Eine Querbohrung 8 durchstößt die Rohrwand 12 an zwei Stellen 9, 10. In der Querbohrung 8 ist ein Zugelement 11 angeordnet. Das Zugelement 11 ist an seinen Enden 11a, 11b mit der Rohrwand 12 verbunden.

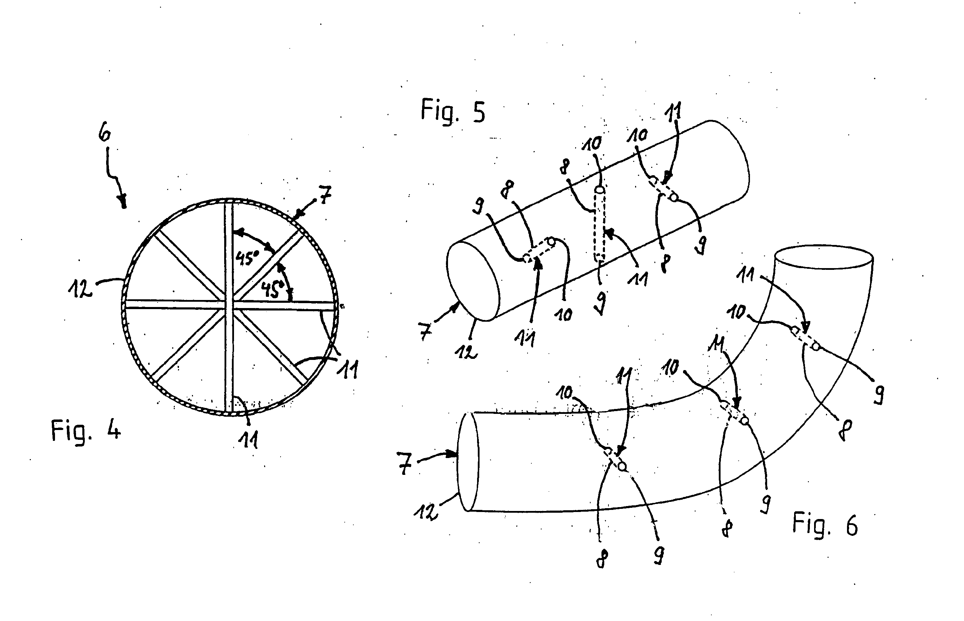

In Figur 4 ist eine Schnittdarstellung durch ein erfindungsgemäßes Karosseriebauteil 6 dargestellt. In dem Rohr 7 sind mehrere Zugelemente 11 hintereinander mit Abständen dazwischen angeordnet. Die Ausrichtung der einzelnen Zugelemente 11 variiert jeweils um einen Winkel von 45°. Selbstverständlich können die Winkel je nach Karosseriebauteil 6 und dessen Einbauort auch größer oder kleiner als 45° sein.

In Figur 5 ist das Karosseriebauteil 6 der Figur 4 noch einmal in einer perspektivischen Ansicht dargestellt. Man erkennt, wie drei Zugelemente 11 mit Abstand zueinander und um einen Winkel von 45° gedreht im Karosseriebauteil 6 angeordnet sind.

In Figur 6 ist ein Karosseriebauteil 6 mit einem gebogenen Rohr 7 dargestellt. In dem Rohr 7 sind insgesamt drei Zugelemente 11 parallel zueinander und beabstandet voneinander angeordnet.

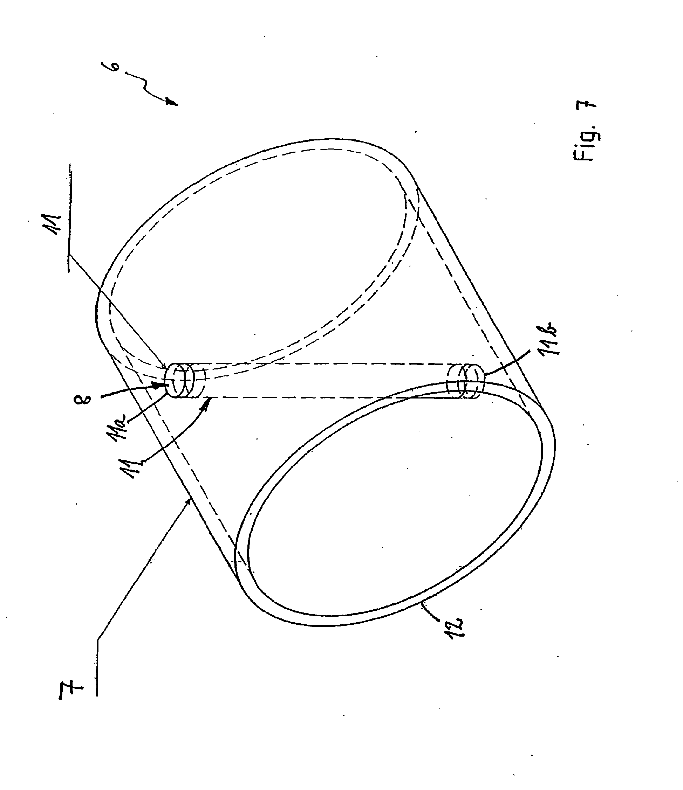

Figur 7 zeigt das erfindungsgemäße Karosseriebauteil 6 in der abstaktesten Form. Man sieht ein Zugelement 11, das in einer Querbohrung 8 eines Rohrs 7 angeordnet und an seinen Enden 11a, 11b mit der Rohrwand 12 verbunden ist.

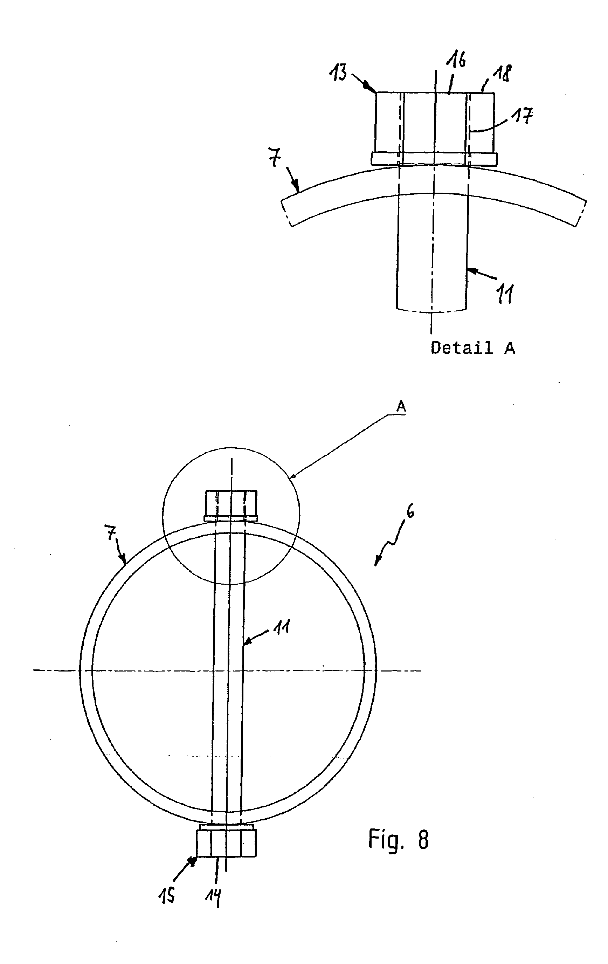

Die Figuren 8 und 8a zeigen ein Karosseriebauteil 6 mit einem Zugelement 11, das an beiden Enden 14, 16 durch eine Schraubverbindung SV mit dem Rohr 7 verbunden ist. An dem in der Bildebene unteren Ende 14 des Zugelements 11 ist ein fester Kopf 15 vorgesehen. Am anderen Ende 16 weist das Zugelement 11 ein Gewinde 17 auf, auf das eine Mutter 18 geschraubt ist.

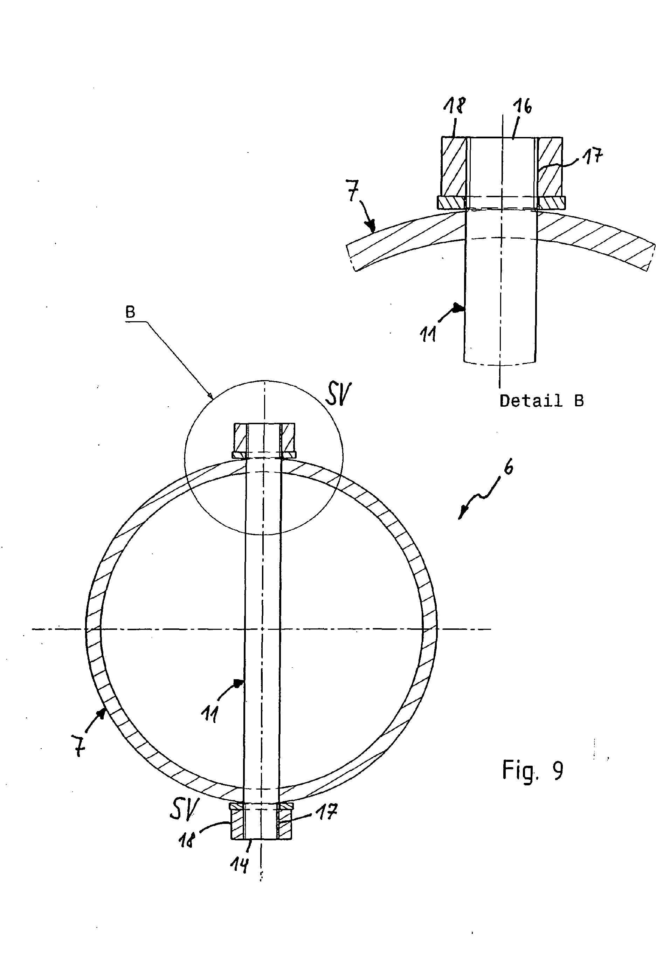

In den Figuren 9 und 9a ist ebenfalls ein Karosseriebauteil 6 dargestellt, bei dem das Zugelement 11 über Schraubverbindungen SV mit dem Rohr 7 verbunden ist. Das Zugelement 11 weist an beiden Enden 14, 16 Gewinde 17 auf. Auf die Gewinde 17 sind jeweils Muttern 18 geschraubt.

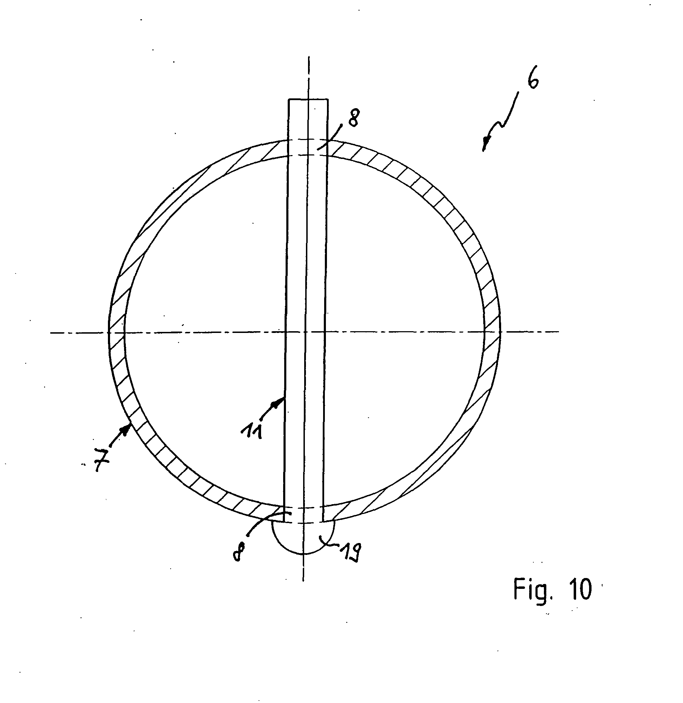

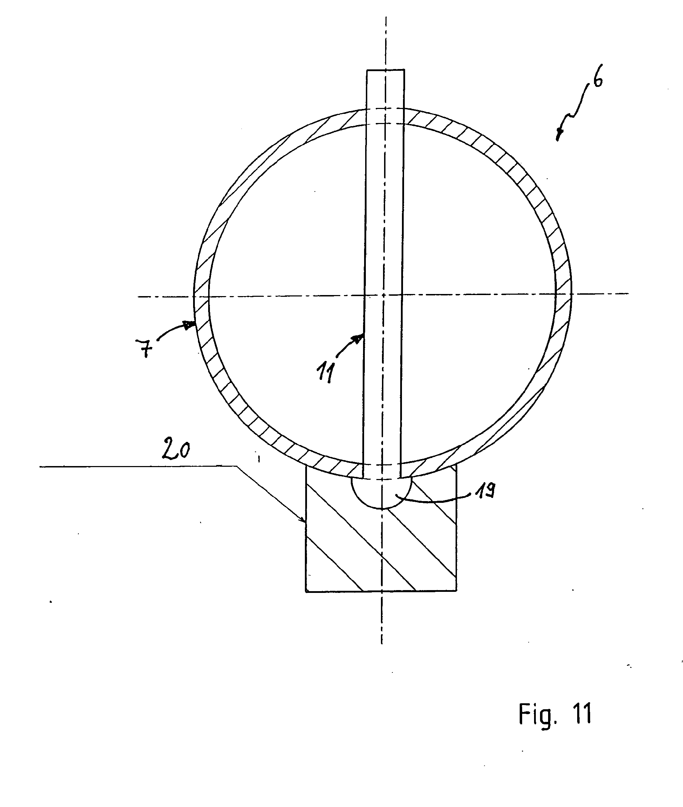

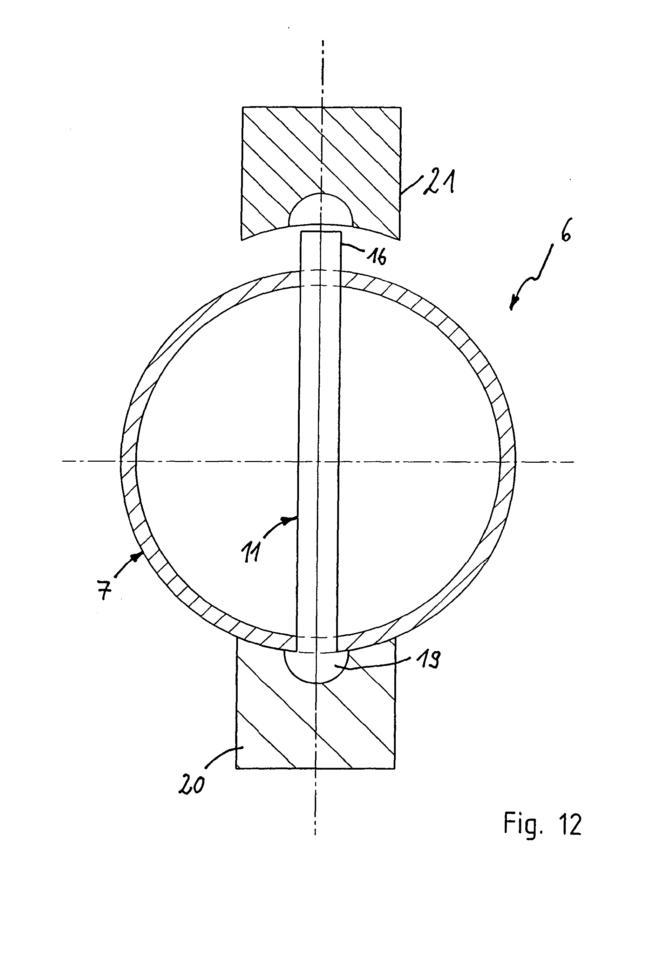

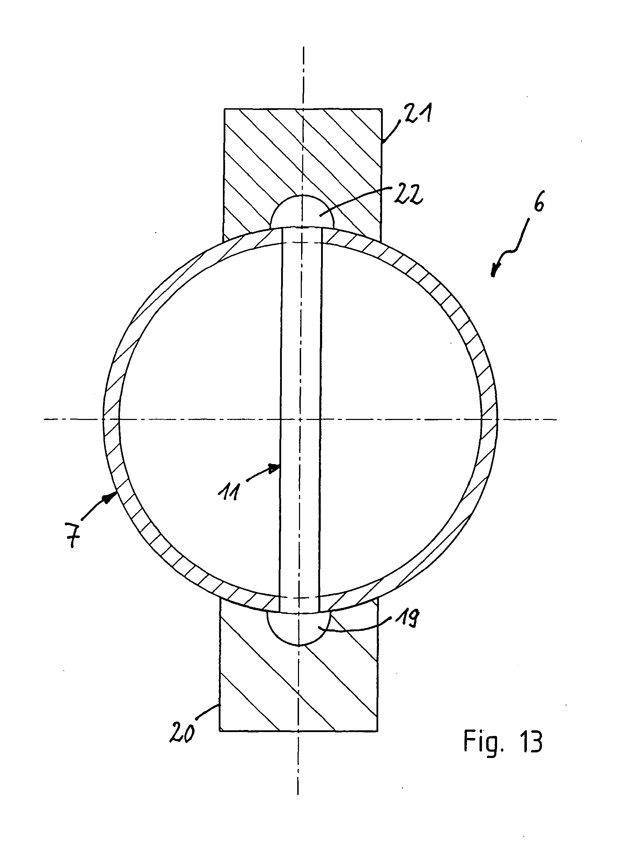

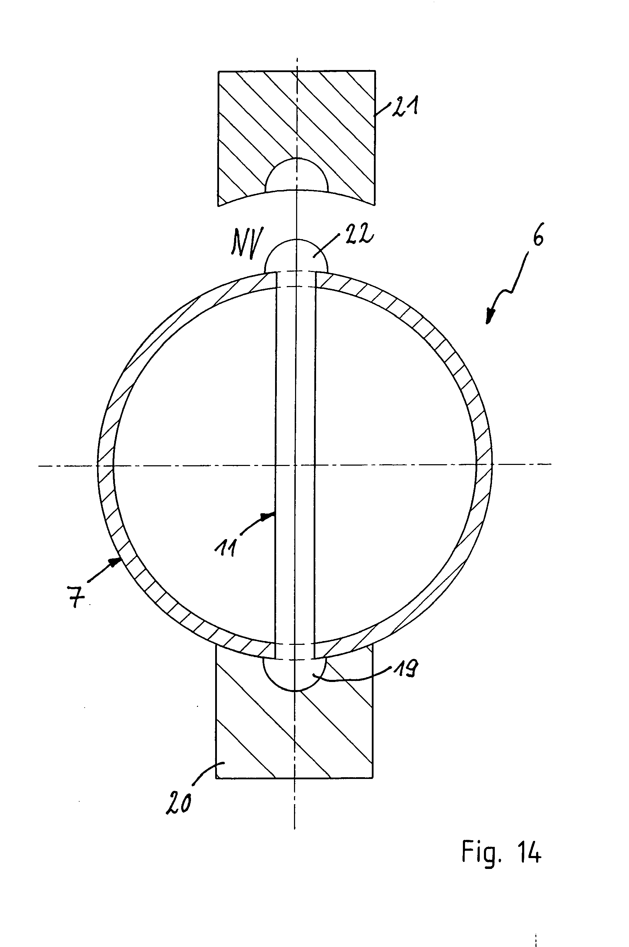

In den Figuren 10 bis 14 ist ein Karosseriebauteil 6 mit einer Nietverbindung NV dargestellt. Die Nietverbindung NV kann eine Kaltnietung oder Warmnietung sein. Das Zugelement 11 wird in die Querbohrung 8 eingeschoben. Das Zugelement 11 weist einseitig eine Verbreiterung 19 in Form eines Nietkopfes auf. Anschließend wird eine Haltevorrichtung 20 auf den Nietkopf aufgesetzt (vgl. Figur 11). In den Figuren 12 bis 14 ist dargestellt wie ein Umformwerkzeug 21 auf das gegenüberliegende Ende 16 des Zugelements 11 aufgeschoben wird, um einen weiteren Nietkopf 22 an diesem Ende 16 des Zugelements 11 zu formen.

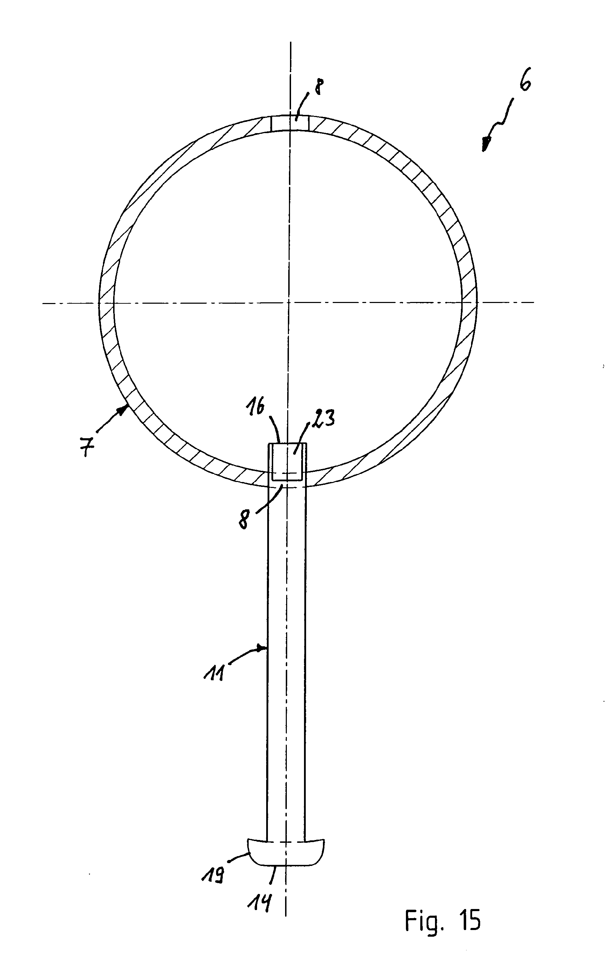

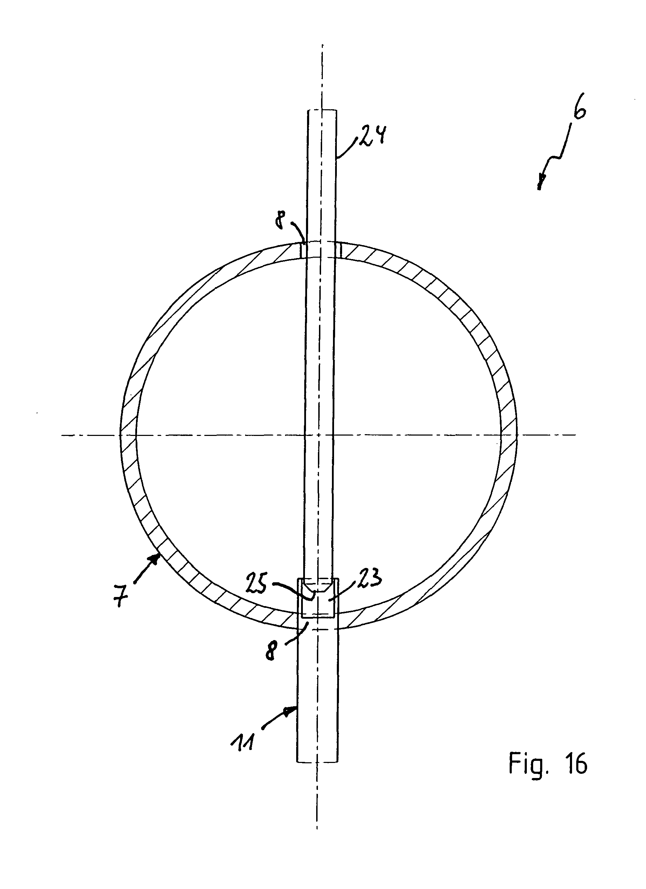

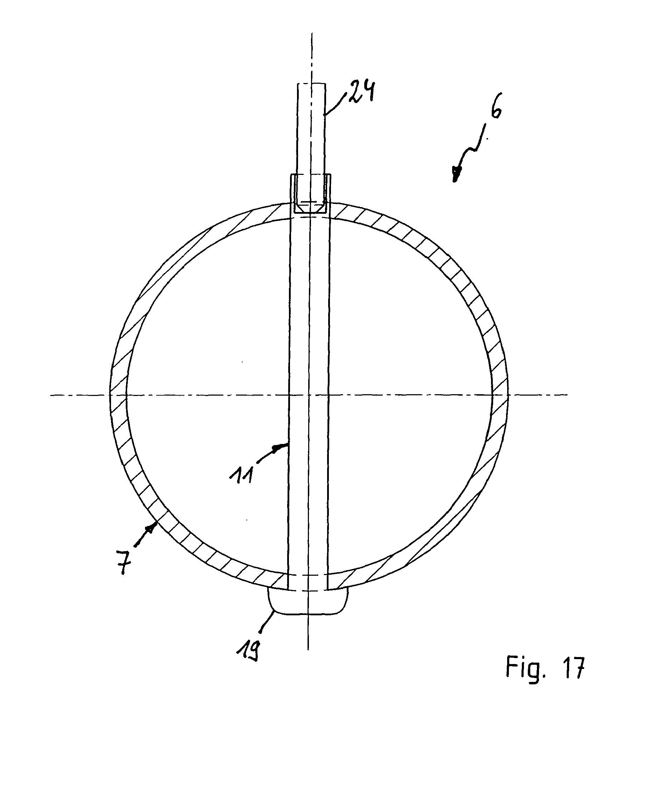

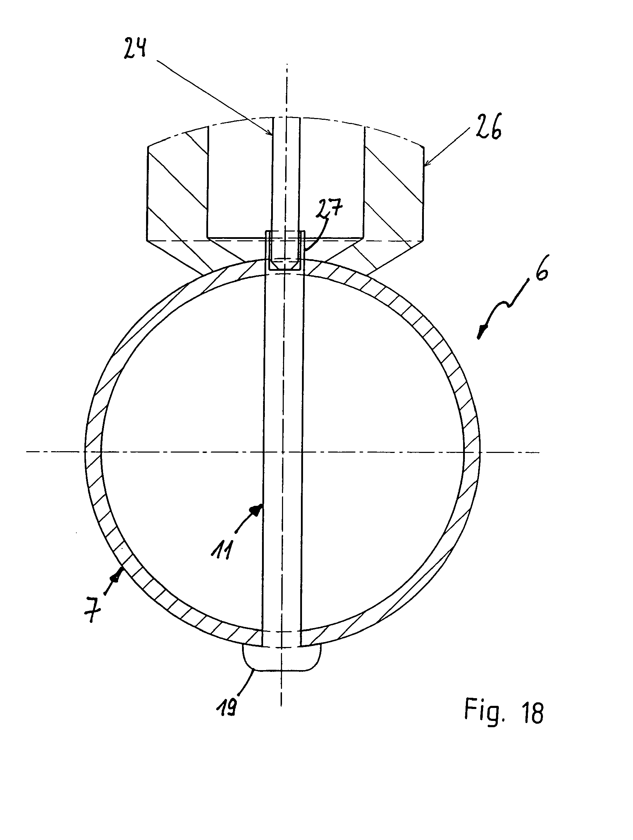

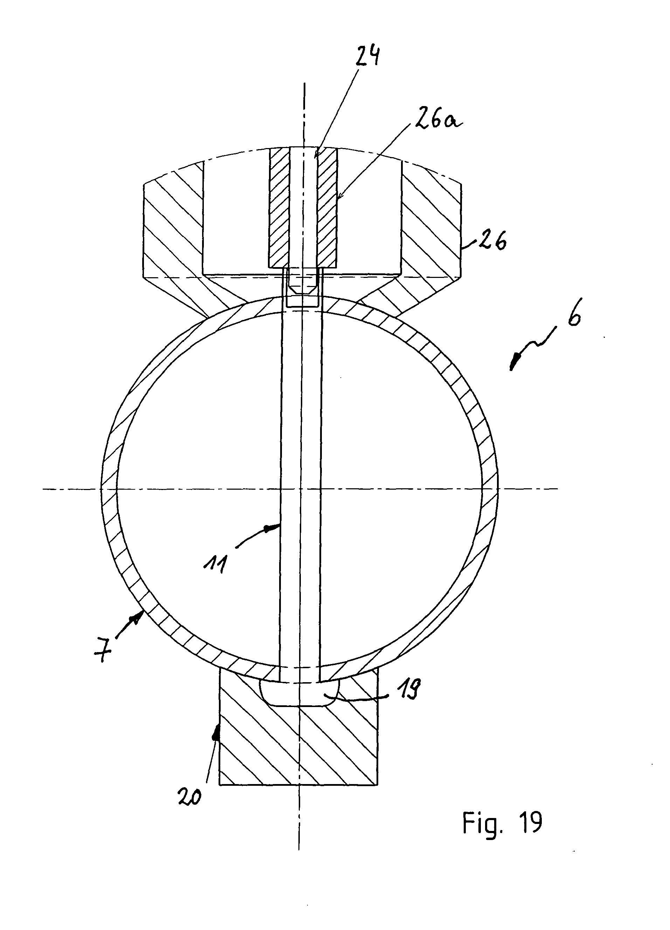

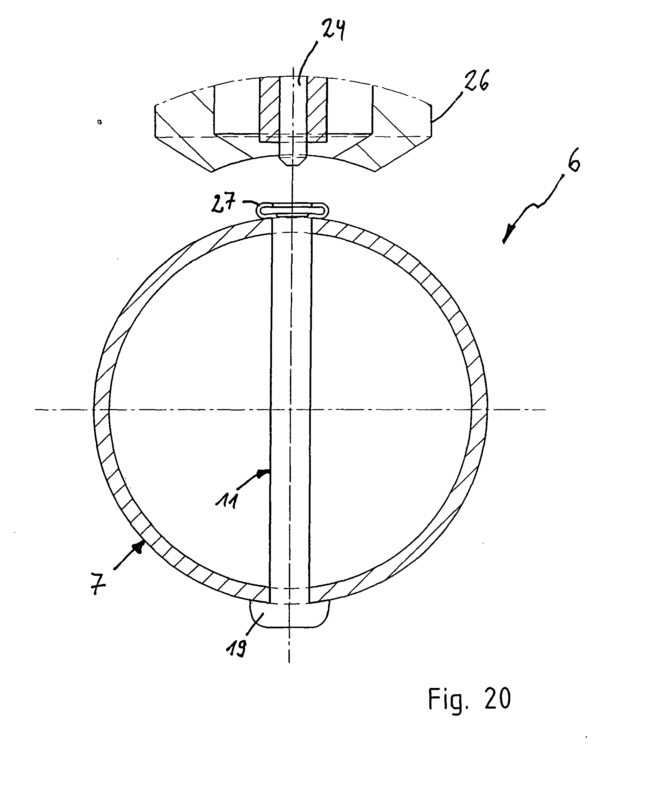

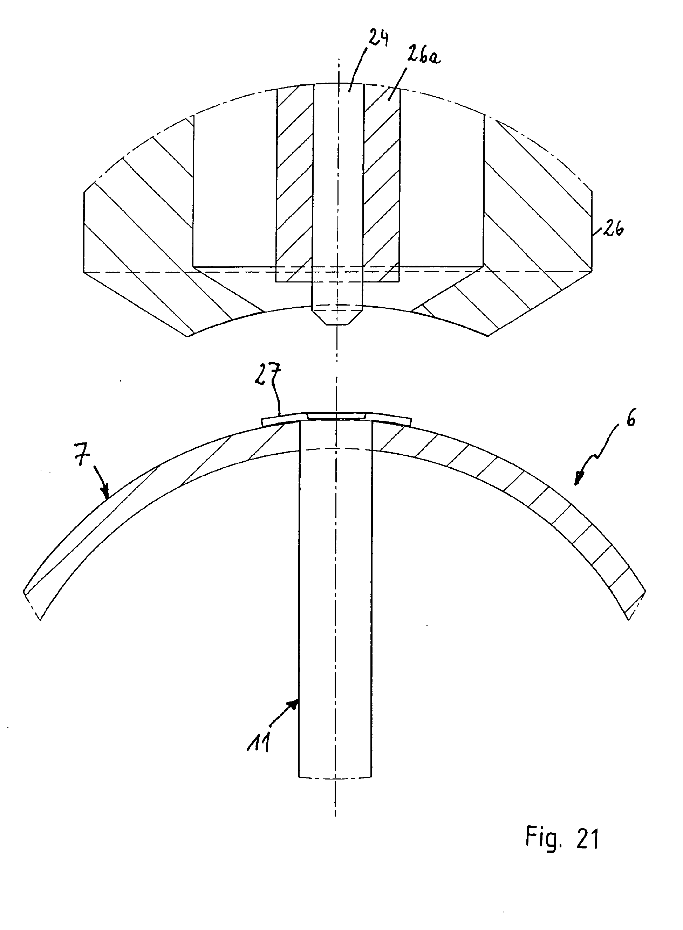

In den Figuren 15 bis 21 ist ein Verfahren zur Herstellung eines Karosseriebauteils 6 mit einem Halbhohlniet dargestellt. Bei diesem Verfahren gelangt ein Zugelement 11 zum Einsatz, das an einem Ende 14 eine Verbreiterung 19 in Form eines Kopfes und am gegenüberliegenden Ende 16 ein sich in Längsrichtung des Zugelements 11 erstreckendes Sackloch 23 aufweist. Das Zugelement 11 wird in das Rohr 7 mittels einer Positionierhilfe 24 eingefädelt. Hierzu wird von der einen Seite das Zugelement 11 in die Querbohrung 8 eingeschoben, während von der anderen Seite die Positionierhilfe 24 eingeführt wird. Ein Ende 25 der Positionierhilfe 24 wird in das Sackloch 23 eingeführt (Fig. 16) und anschließend wird das Zugelement 11 vollständig durch die Querbohrung 8 gefädelt (Fig. 17). Dann wird ein Vorspannwerkzeug 26 angesetzt und das Zugelement 11 vorgespannt (Fig. 18), wobei eine Gegenhaltevorrichtung 20 auf der gegenüberliegenden Seite auf das Zugelement 11 aufgesetzt wird (Fig. 19). Abschließend wird die Hohlwand 27 des Zugelements 11 mit einem Nietumformer 26a umgeformt, soweit sie aus dem Rohr 7 hervorragt, wobei die Hohlwand 27 entweder, wie in Figur 20 dargestellt, doppellagig platt gedrückt, oder, wie in Figur 21 dargestellt, nach außen umgestellt wird.

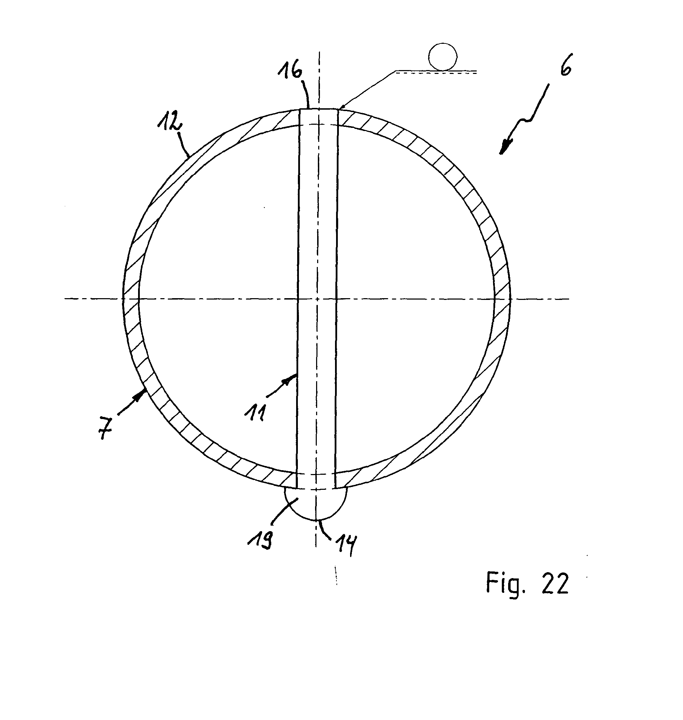

In Figur 22 ist ein Karosseriebauteil 6 dargestellt, bei dem das Zugelement 11 an einem Ende 14 einen Kopf 19 aufweist und am gegenüberliegenden Ende 16 mit der Rohrwand 12 punktverschweißt ist.

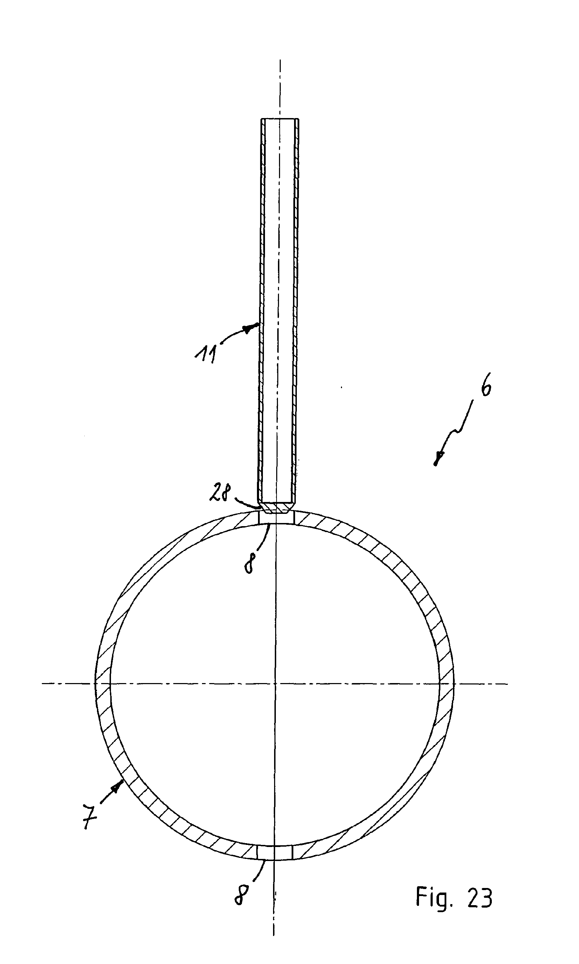

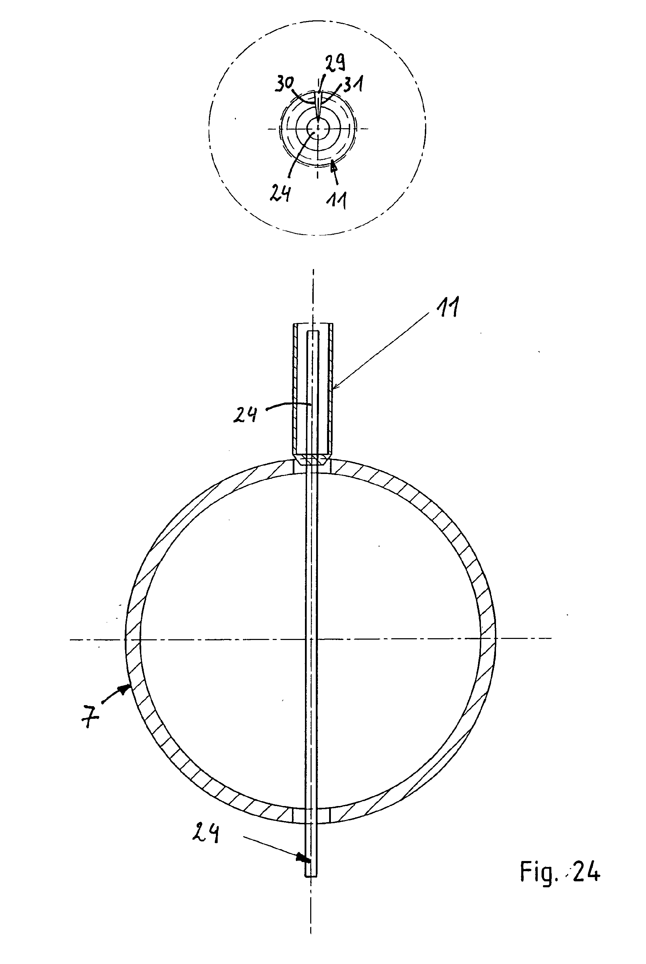

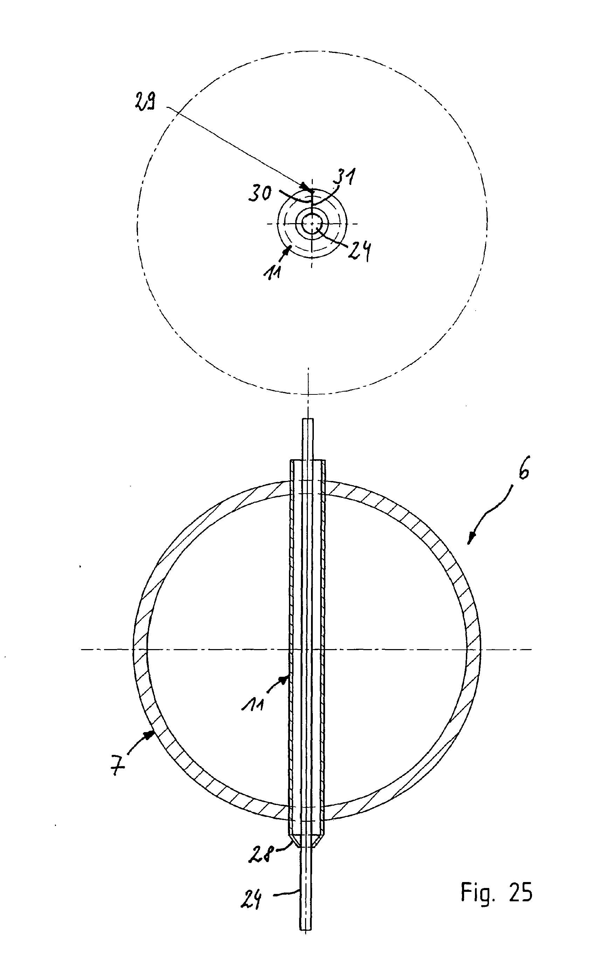

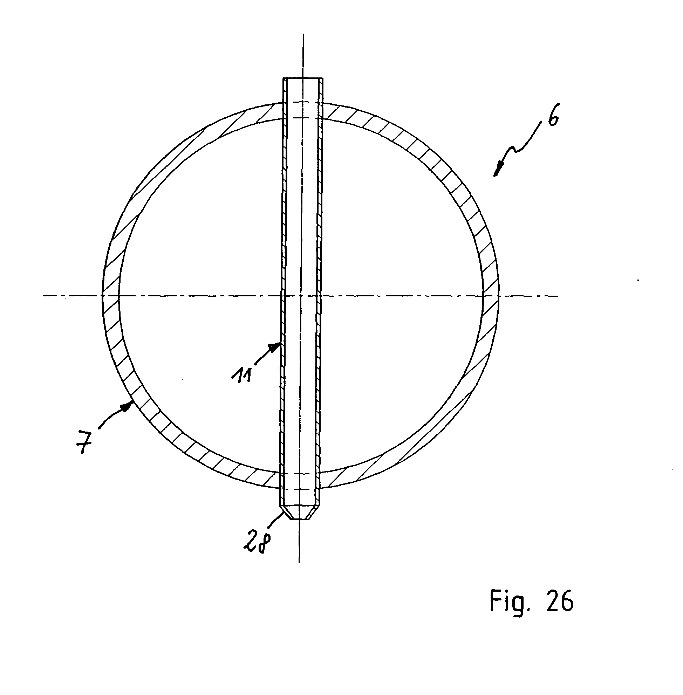

In den Figuren 23 bis 26 ist ein Verfahren zur Herstellung eines Karosseriebauteils 6 dargestellt, bei dem das Zugelement 11 als Spannstift ausgeführt ist. Der Spannstift ist längsgeschlitzt und besteht aus einem Federstahl. An seinem in der Bildebene unteren Ende 14 weist der Spannstift eine Fase 28 auf, um sein Einfädeln in das Rohr 7 zu erleichtern. Auch hier kann eine Positionierhilfe 24 verwendet werden, um das Einfädeln bzw. Einschlagen des Spannstiftes zu erleichtern. Wie man durch einen Vergleich der Figuren 24 und 25 sehen kann, ist der Schlitz 29 des Spannstifts in Folge des Einschlagvorgangs zusammengedrückt, so dass die gegenüberliegenden Kanten 30, 31 des Spannstiftes im eingeschlagenen Zustand (Fig. 25) aneinander anliegen.

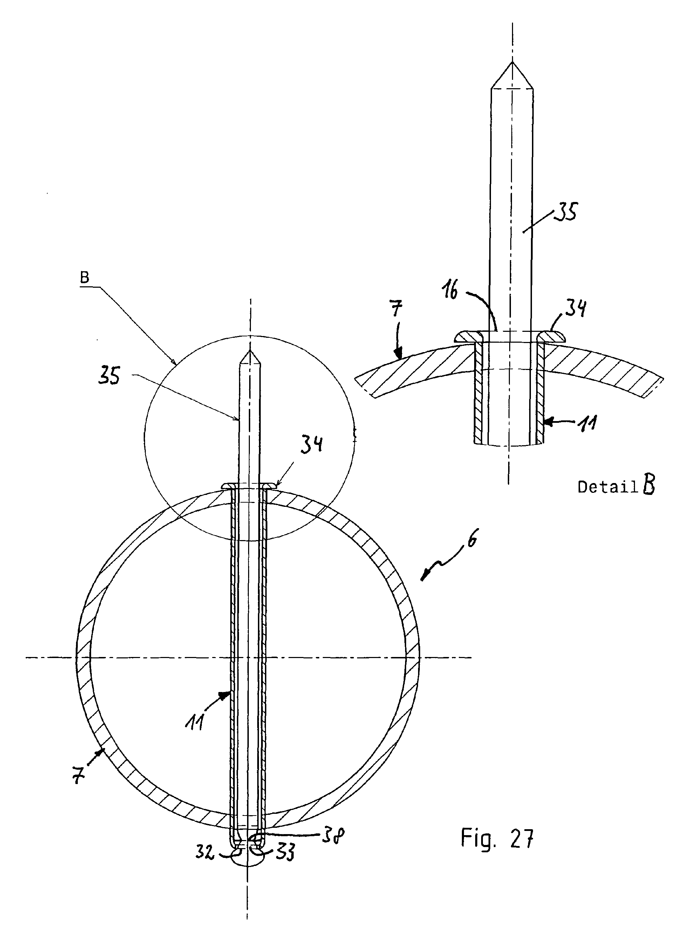

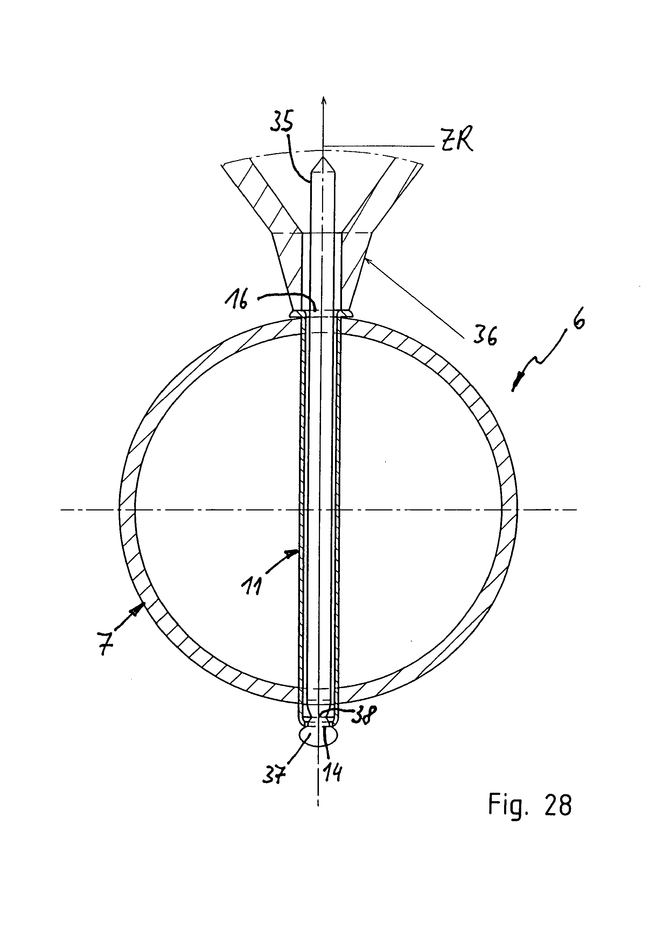

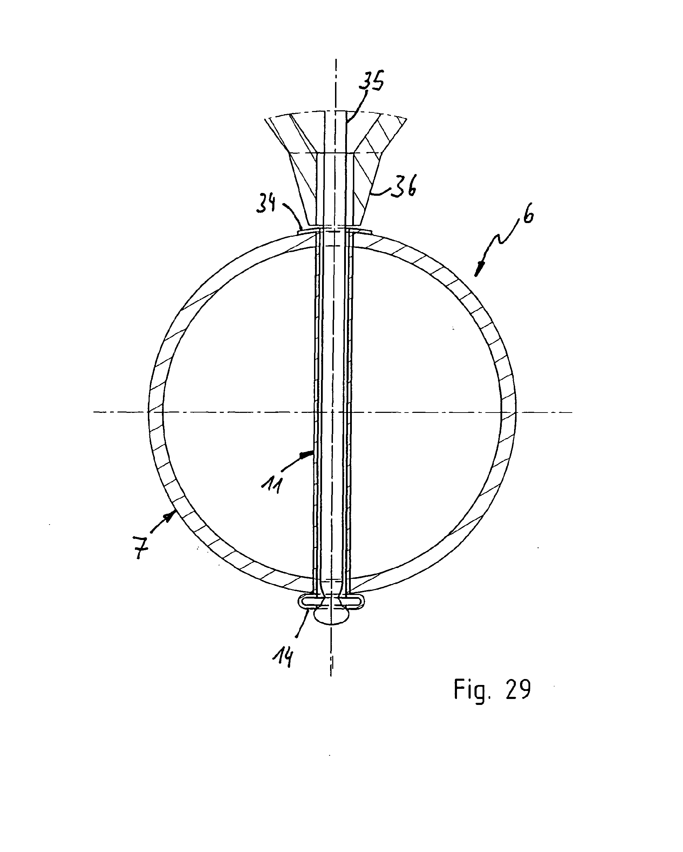

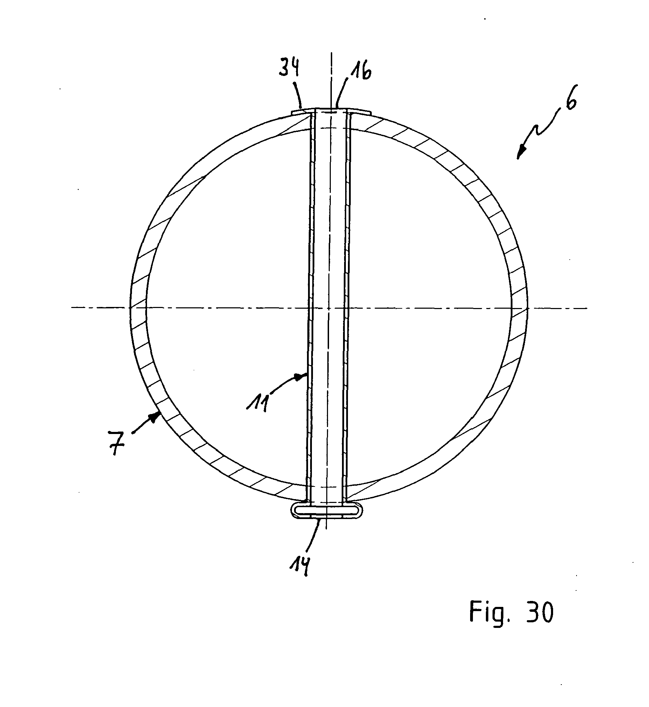

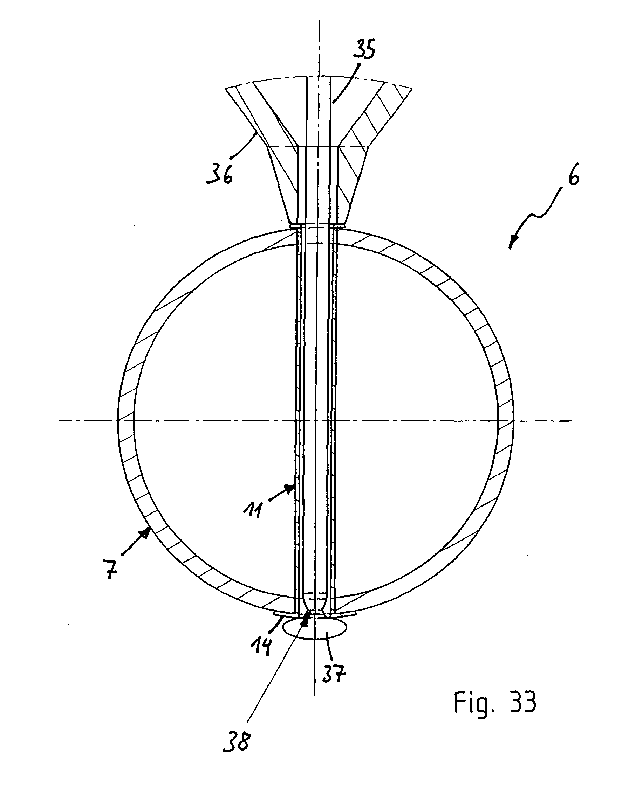

In den Figuren 27 bis 30 ist ein Verfahren zur Herstellung eines Karosseriebauteils 6 mit einem Zugelement 11 in Form eines Blindniets dargestellt. In Figur 27 ist das Zugelement 11 bereits in das Rohr 7 eingefädelt. Das Zugelement 11 hat die Form eines langgestreckten Topfes, wobei der Boden 32 eine Bohrung 33 oder Lochung aufweist. Am oberen Ende 16 weist das Zugelement 11 einen Kragen 34 auf. Durch die Bohrung 33 im Boden 32 ist ein Nietdorn 35 in das Zugelement 11 eingeschoben. Wie man in Figur 33 erkennen kann, wird anschließend ein Vorspannwerkzeug 36 am oberen Ende des Zugelements 11 angesetzt. Sodann wird der Nietdorn 35 mit großer Kraft in Zugrichtung ZR gezogen, so dass der Nietdorn 35 mit seinem Kopf 37 das Zugelement 11 am unteren Ende 14 doppellagig umformt und nach dem Überschreiten einer vordefinierten Zugkraft an einer Sollbruchstelle 38 abreißt. Das Ergebnis sieht man in Figur 30, wo das Zugelement 11 am unteren Ende 14 doppellagig umgeformt ist und am oberen Ende 16 nach außen umgestellt ist.

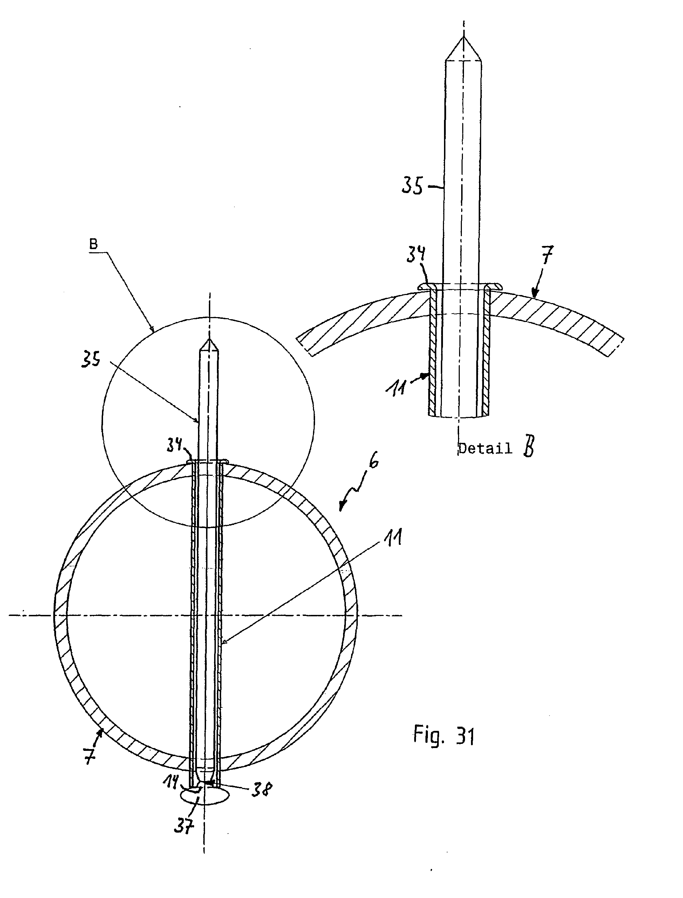

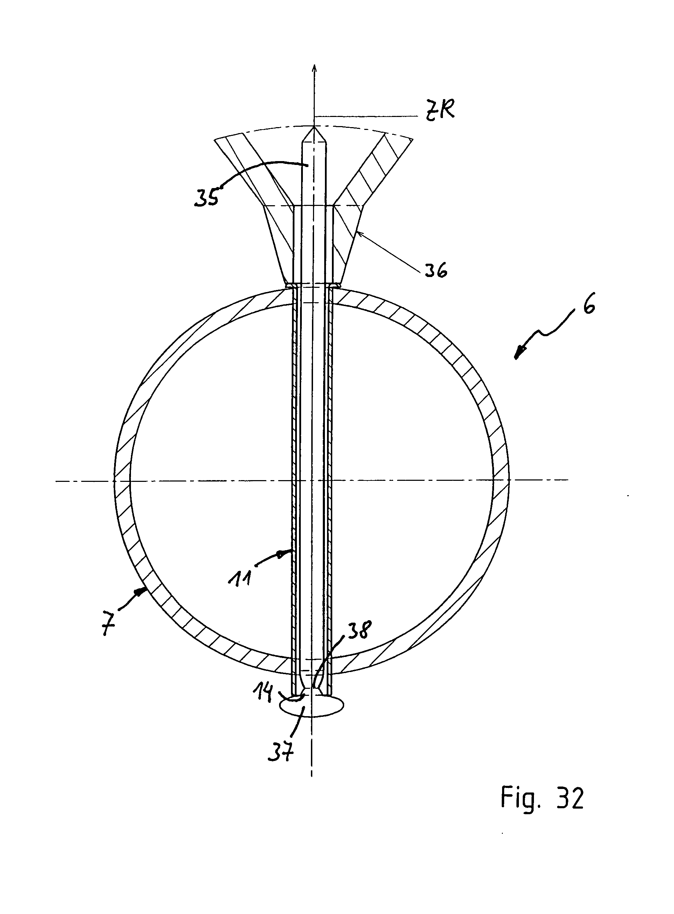

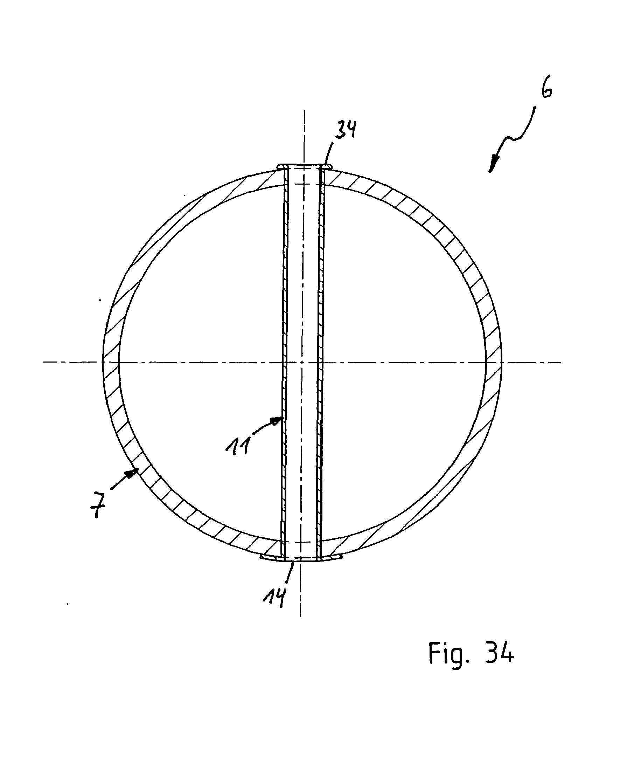

In den Figuren 31 bis 34 ist ein alternatives Verfahren zur Herstellung eines Karosseriebauteils 6 mit einem Zugelement 11 in Form eines Blindniets dargestellt, das sich vom vorher beschriebenen lediglich dadurch unterscheidet, dass das Zugelement 11 am unteren Ende 14 keinen Boden hat, sondern gerade ausläuft, und der Nietdorn 35 einen verbreiterten Kopf 37 aufweist. Diese Änderungen bewirken, dass das Zugelement 11 am unteren Ende nicht doppellagig, sondern lediglich nach außen umgestellt wird, wie man in Figur 34 erkennen kann.

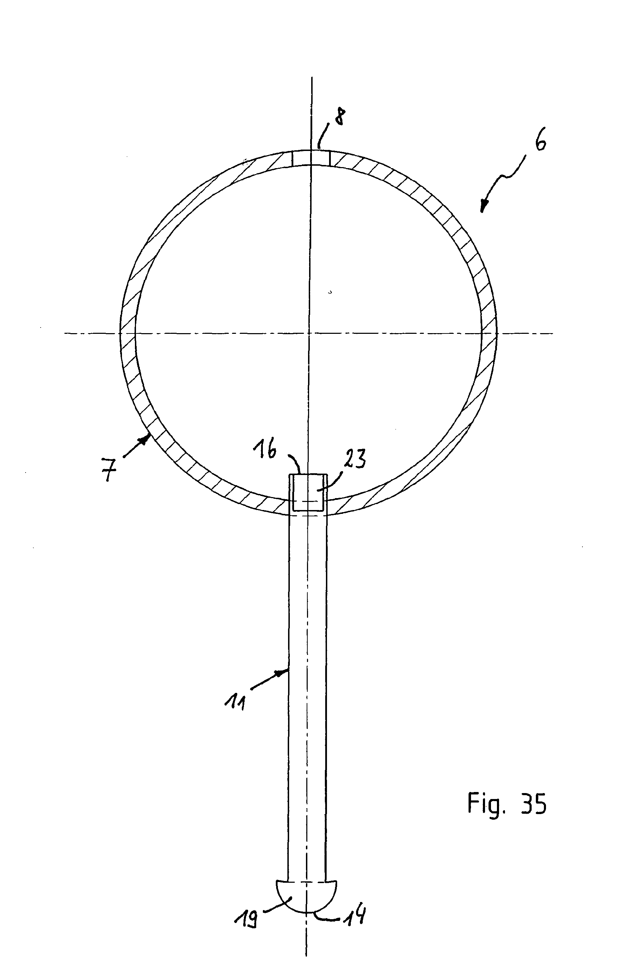

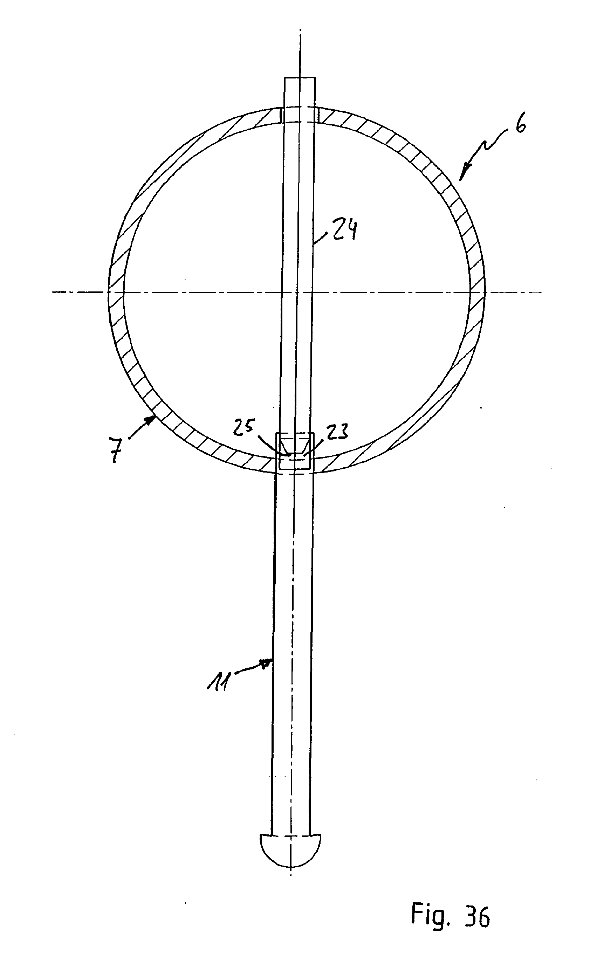

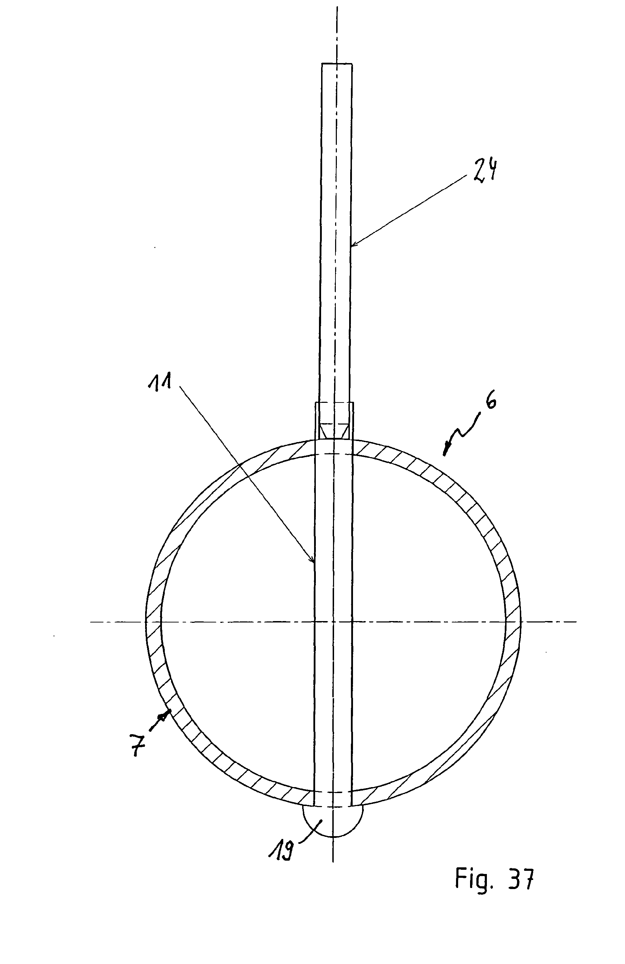

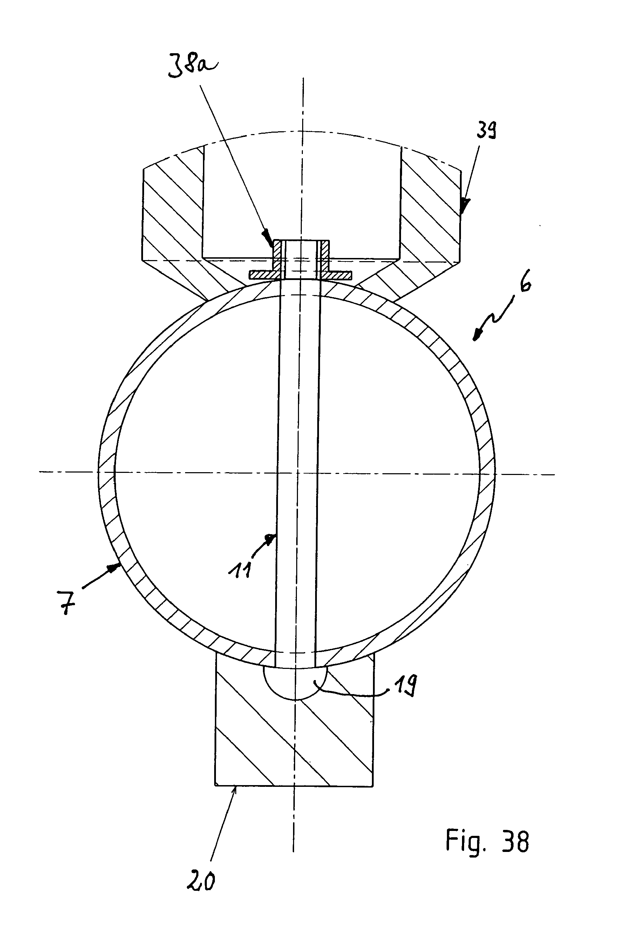

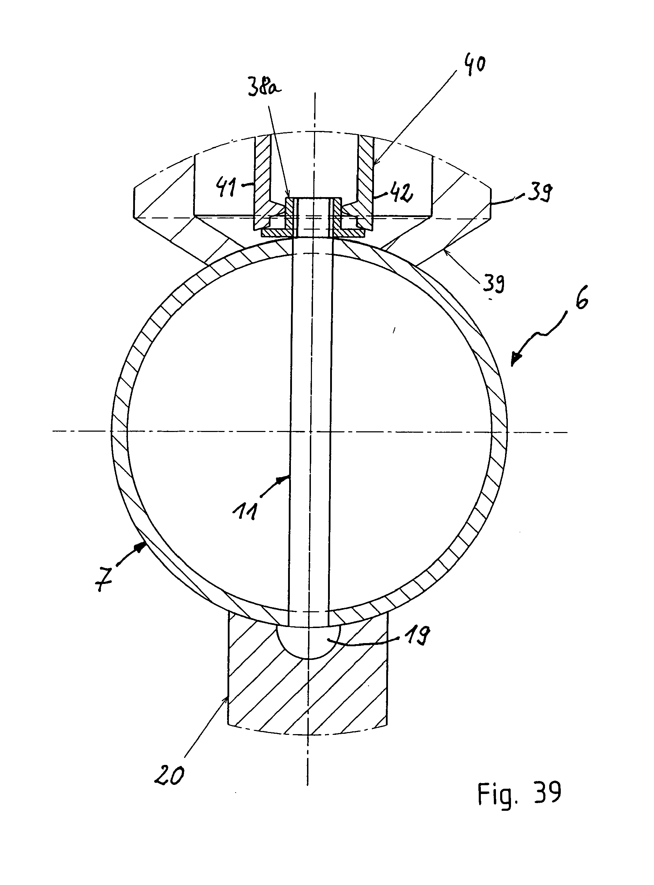

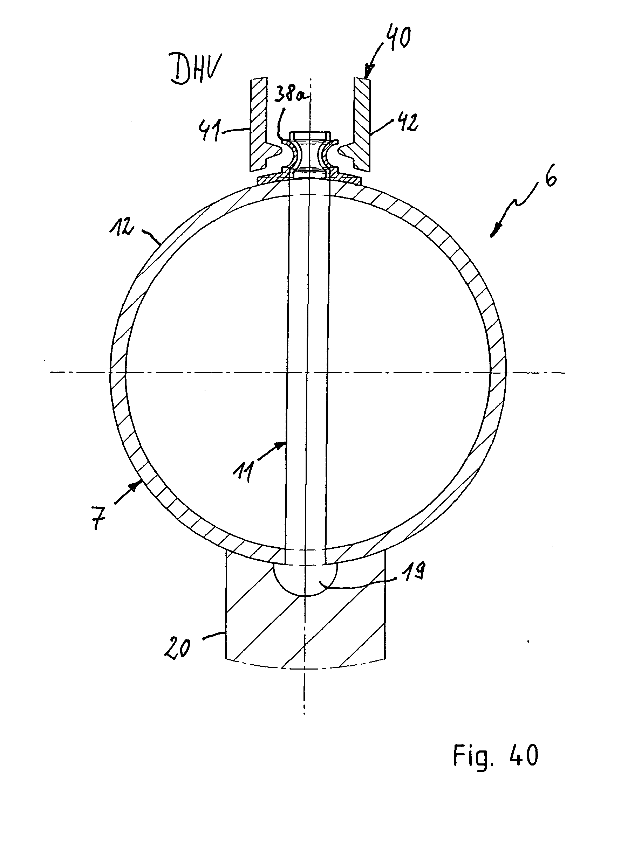

In den Figuren 35 bis 40 ist ein Verfahren zur Herstellung eines Karosseriebauteils 6 mit einer Druckhülsenverbindung DHV an einem Ende 16 dargestellt. Wie in dem Halbhohlniet-Verfahren oben bereits einmal beschrieben wurde, wird ein Zugelement 11 mit Hilfe einer Positionierhilfe 24 in das Rohr 27 eingefädelt. Das Zugelement 11 weist an seinem in der Bildebene unteren Ende 14 einen Kopf 19 und am gegenüberliegenden Ende 16 ein Sackloch 23 auf. Auf dem Kopf 19 wird nach dem Einfädeln eine Haltevorrichtung 20 platziert, während auf das gegenüberliegende Ende 16 eine Verbindungshülse 38a mit einem Vorspannwerkzeug 39 aufgesetzt wird. Anschließend kann das Zugelement 11 vorgespannt werden. Danach wird ein Formwerkzeug 40 auf die Verbindungshülse 38a aufgeschoben, dessen Formbacken 41, 42 radial nach innen drücken und die Verbindungshülse 38a sowie das Zugelement 11 plastisch verformen. Auf diese Weise wird eine formschlüssige Verbindung am in der Bildebene oberen Ende 16 des Zugelements 11 hergestellt (Fig. 40).

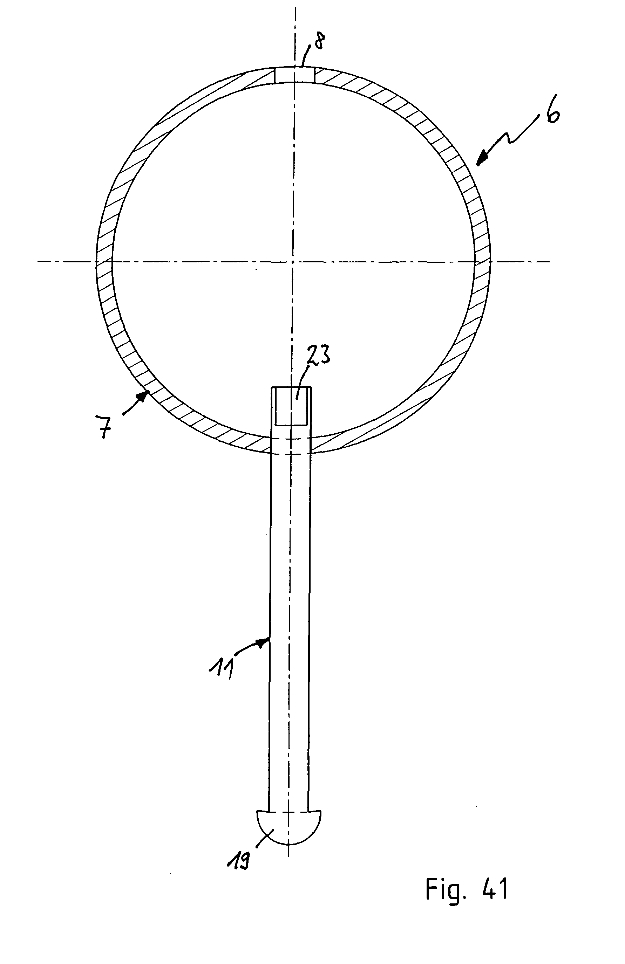

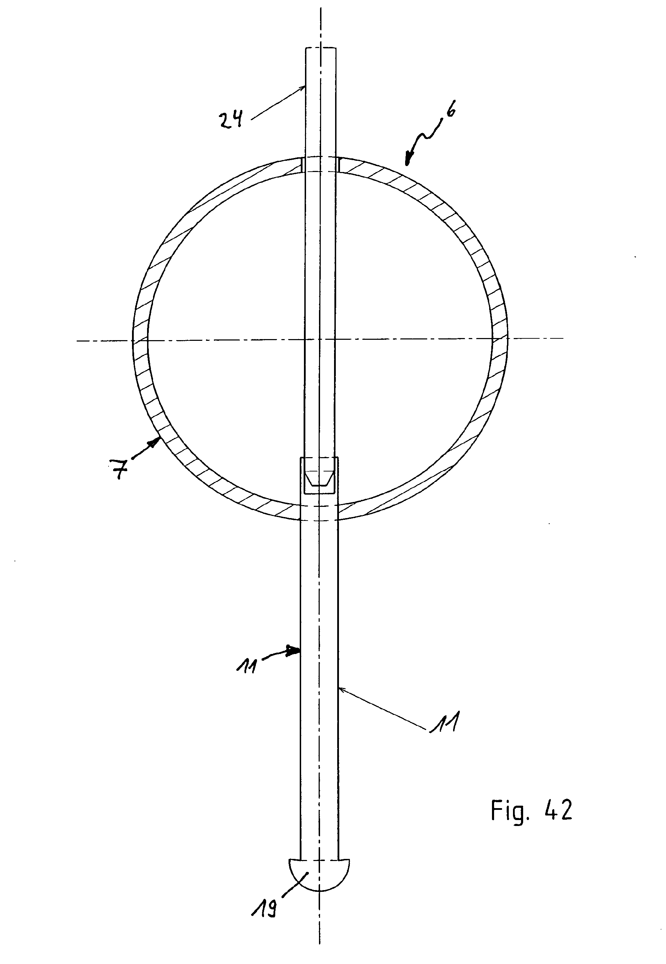

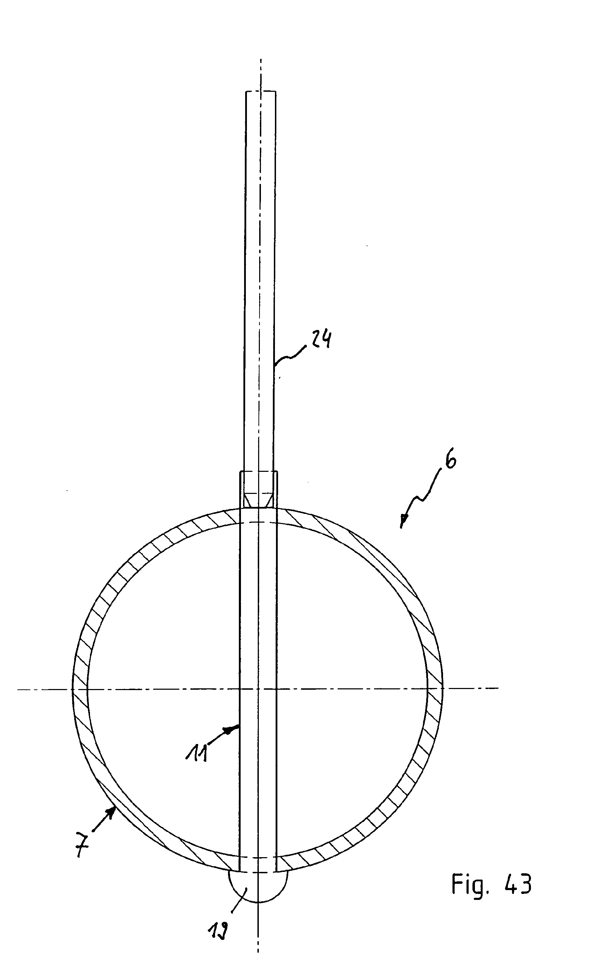

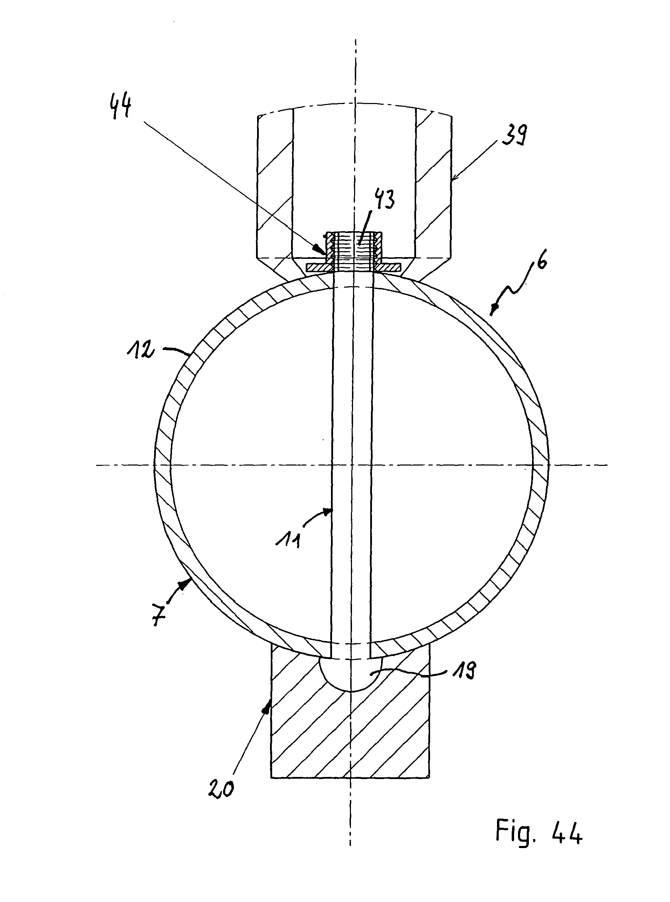

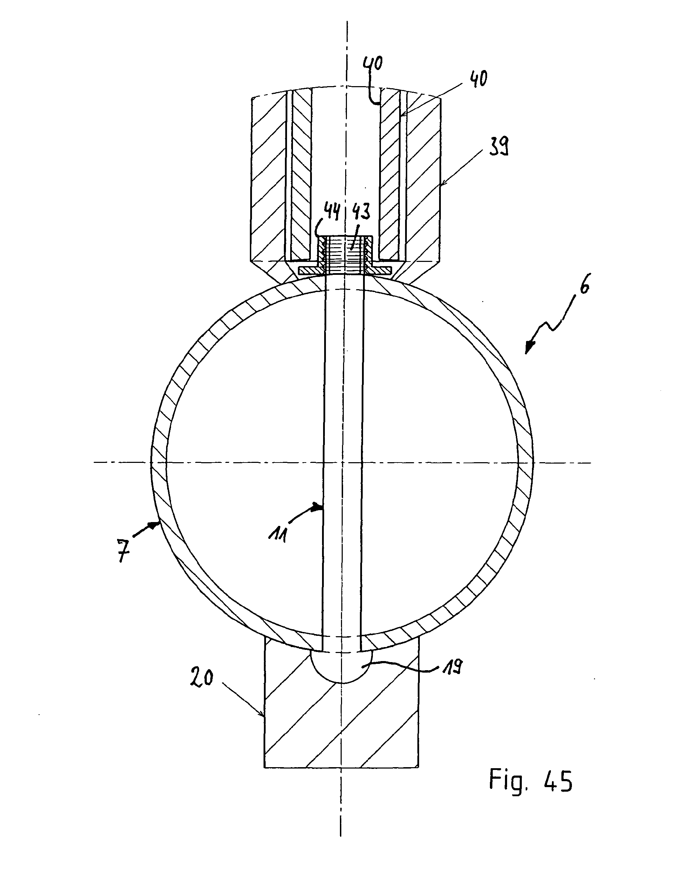

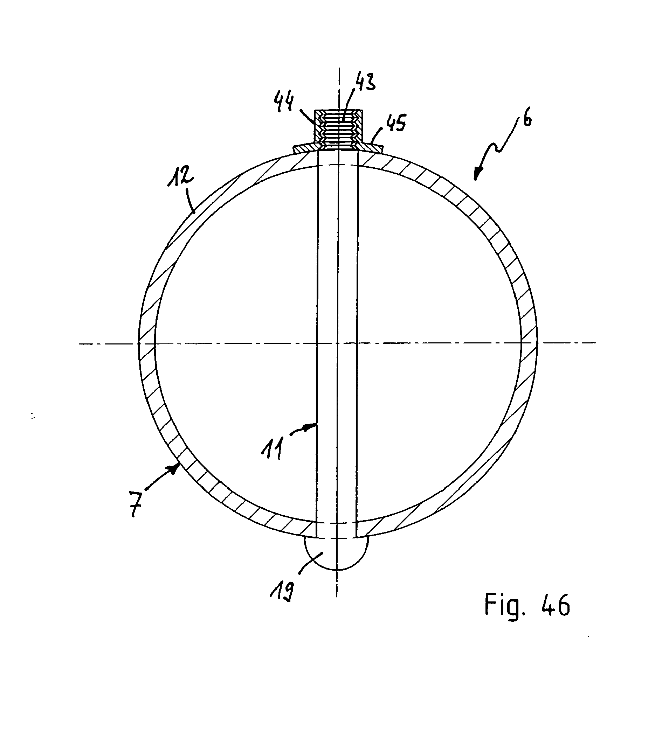

In den Figuren 41 bis 46 ist ein Verfahren zur Herstellung eines Karosseriebauteils 6 mit einer Gewindehülse 44 dargestellt. Das Zugelement 11 weist an seinem oberen Ende 16 ein Sackloch 23 und im Bereich des Sacklochs 23 ein Außengewinde 43 auf und wird mit Hilfe einer Positionierhilfe 24 in das Rohr 7 eingefädelt (Fig. 42, 43). Auf dieses Außengewinde 43 wird eine Gewindehülse 44 aufgeschraubt. Zusätzlich wird mit einem Vorspannwerkzeug 35 eine Vorspannung erzeugt. Nach dem Aufschrauben der Gewindehülse 44 wird der Kragen 45 der Gewindehülse 44 umgeformt, so dass der Kragen 45 an der Rohrwand 12 anliegt (Fig. 46).

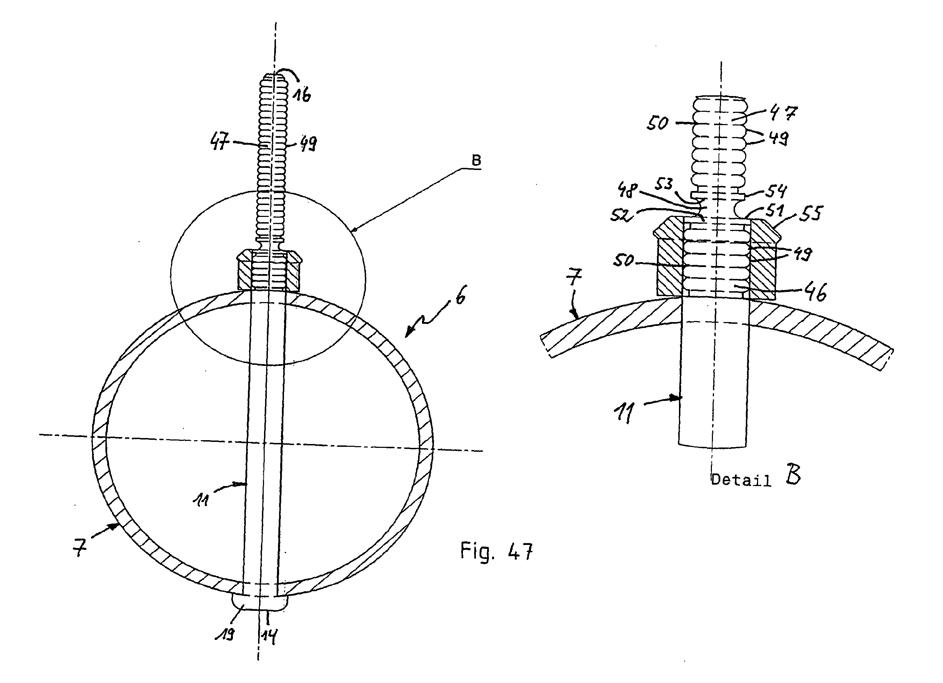

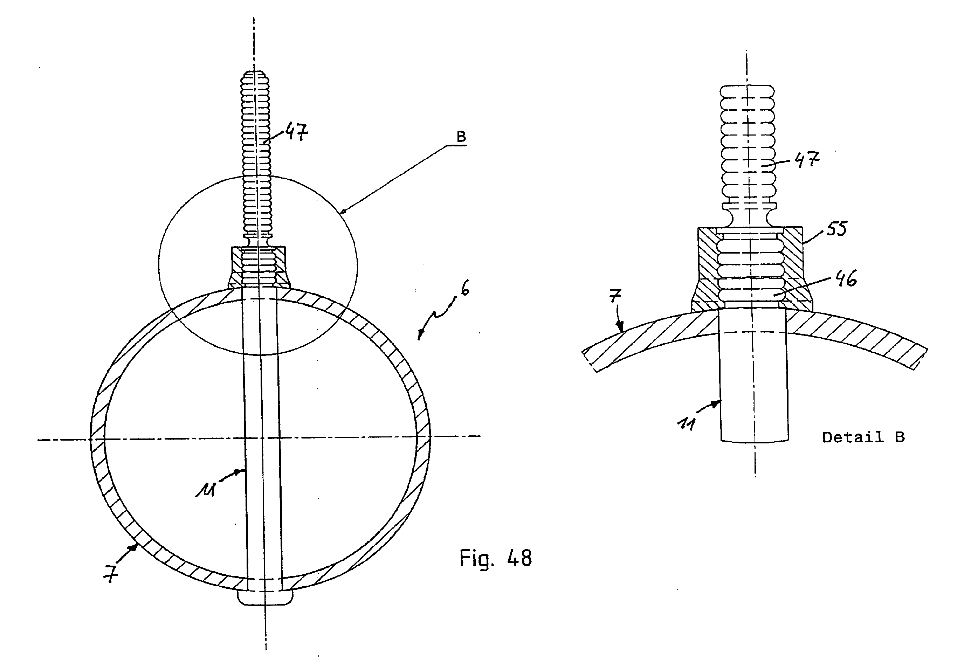

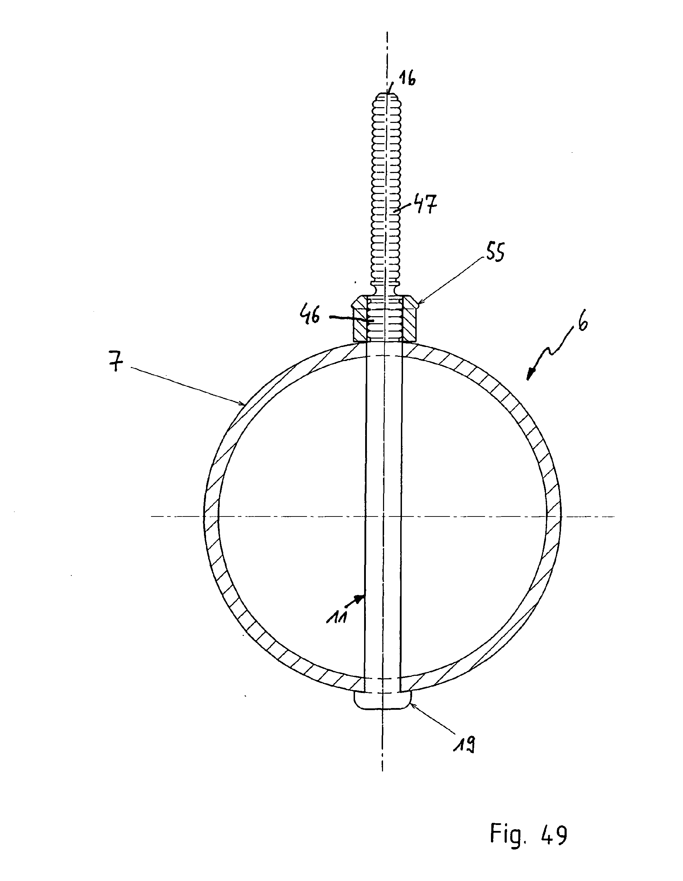

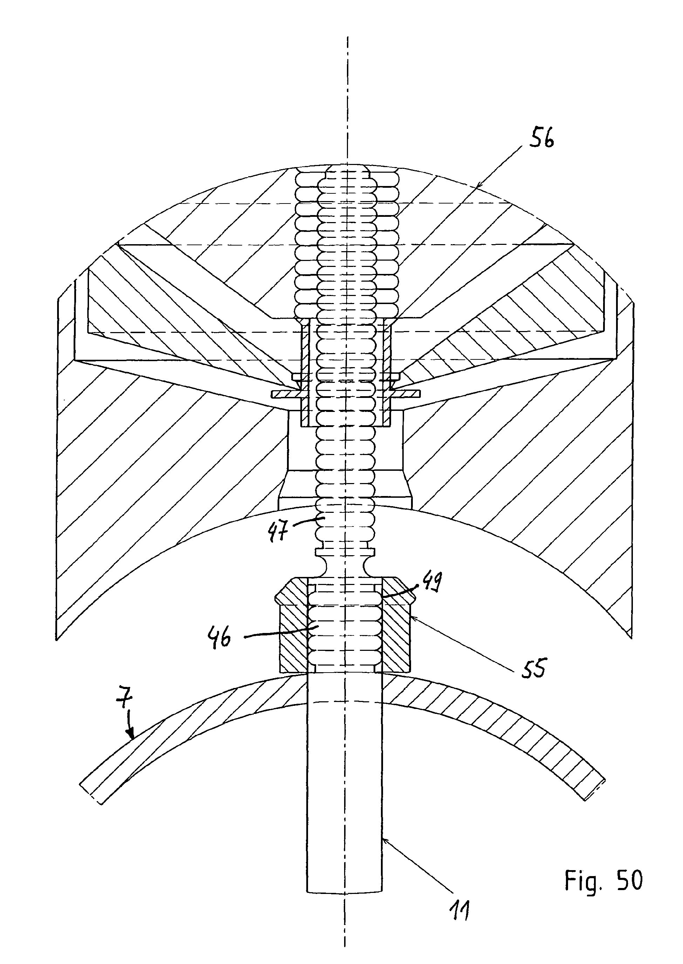

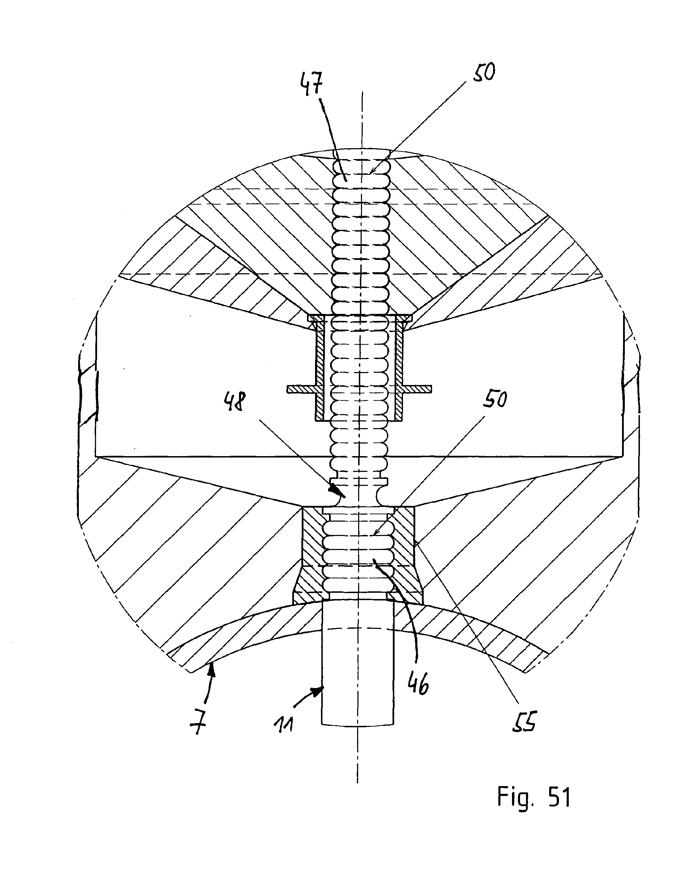

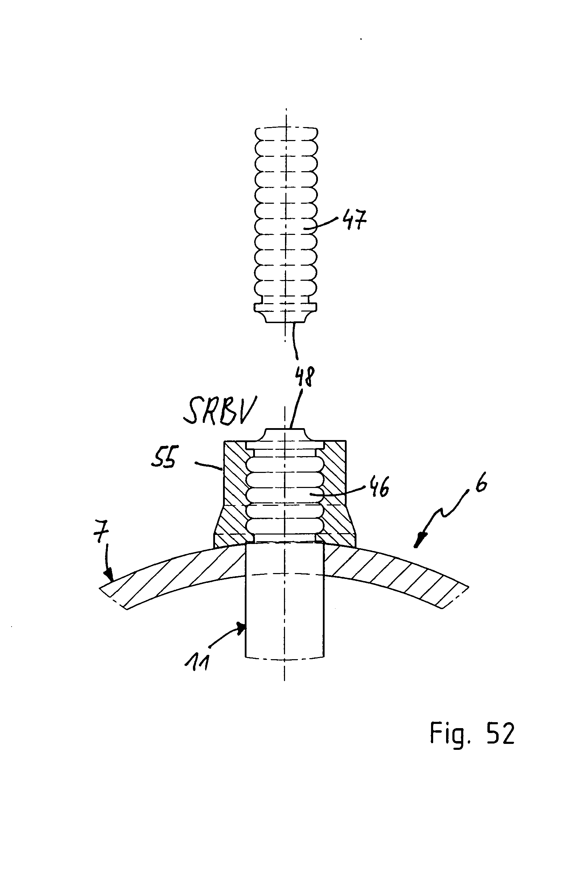

In den Figuren 47 bis 52 ist ein Verfahren zur Herstellung eines Karosseriebauteils 6 mit einer Schließringbolzenverbindung SRBV dargestellt. Das Zugelement 11 weist hierzu an seinem oberen Ende 16, das dem Kopf 19 am unteren Ende 14 gegenüberliegt, zwei Abschnitte auf: einen Schließringbolzenabschnitt 46 und einen Greifabschnitt 47. Die beiden Abschnitte 46, 47 sind durch eine Sollbruchstelle 48 beabstandet. Im Schließringbolzenabschnitt 46 und im Greifabschnitt 47 weist das Zugelement 11 außenseitig Wülste 49 auf. Zwischen den Wülsten 49 befinden sich Rillen 50. Am oberen Ende 51 des Schließringbolzenabschnitts 46 ist ein scheibenförmiger Bund 52 vorgesehen, der im Querschnitt rechteckig ist. Der Greifabschnitt 47 weist an seinem unteren Ende 53 ebenfalls einen scheibenförmigen Bund 54 auf, der im Querschnitt rechteckig ist. Nach dem Einfädeln des Zugelements 11 wird der Schließringbolzen auf das obere Ende 16 des Zugelements 11 aufgeschoben. Dies ist insbesondere in der Figur 47 zu sehen. In den Figur 48 ist das Karosseriebauteil 6 nach dem Schließen des Schließringbolzens 55 dargestellt. In den Figuren 49 bis 52 sind die einzelnen Verfahrensschritte des Schließens im Detail dargestellt. In Figur 54 wird zunächst der Schließringbolzen 55 auf das Zugelement 12 aufgeschoben. So dann wird ein Setzwerkzeug 56 von außen auf das Zugelement 11 und über den Schließringbolzen 55 geschoben, wie man in Figur 50 erkennen kann. Durch das Setzwerkzeug 56 wird das Zugelement 11 zunächst vorgespannt und dann der Schließringbolzen 55 plastisch verformt und somit geschlossen, so dass er formschlüssig auf das Zugelement 11 aufgepresst ist. Abschließend wird der Greifabschnitt 47 über die Sollbruchstelle 48 von dem Zugelement 11 getrennt, wie man in den Figuren 51 und 52 sehen kann.

### Bezugszeichen:

- 1 -: Rohr
- 2 -: Wand
- 3 -: Ausgangsquerschnitt
- 4 -: elliptische Form
- 5 -: Rohrwand
- 6 -: Karosseriebauteil
- 7 -: Rohr
- 8 -: Querbohrung
- 9 -: Stelle
- 10 -: Stelle
- 11 -: Zugelement
- 11a -: Ende v. 11
- 11 b -: Ende v. 11
- 12 -: Rohrwand
- 14 -: unteres Ende v. 11
- 15 -: Kopf
- 16 -: oberes Ende v. 11
- 17 -: Gewinde
- 18 -: Mutter
- 19 -: Verbreiterung
- 20 -: Haltevorrichtung
- 21 -: Umformwerkzeug
- 22 -: Nietkopf
- 23 -: Sackloch
- 24 -: Positionierhilfe
- 25 -: Ende v. 24
- 26 -: Vorspannwerkzeug
- 26a -: Nietumformer
- 27 -: Hohlwand
- 28 -: Fase
- 29 -: Schlitz
- 30 -: Kante
- 31 -: Kante
- 32 -: Boden
- 33 -: Bohrung
- 34 -: Kragen
- 35 -: Nietdorn
- 36 -: Vorspannwerkzeug
- 37 -: Kopf
- 38 -: Sollbruchstelle
- 38a -: Verbindungshülse
- 39 -: Vorspannwerkzeug
- 40 -: Formwerkzeug
- 41 -: Formbacke
- 42 -: Formbacke
- 43 -: Außengewinde
- 44 -: Gewindehülse
- 45 -: Kragen
- 46 -: Schließringbolzenabschnitt
- 47 -: Greifabschnitt
- 48 -: Sollbruchstelle
- 49 -: Wulst
- 50 -: Rille
- 51 -: oberes Ende v. 46
- 52 -: Bund
- 53 -: unteres Ende v. 47
- 54 -: Bund
- 55 -: Schließringbolzen
- 56 -: Setzwerkzeug

- DHV -: Druckhülsenverbindung
- HQA -: horizontale Querachse
- NV -: Nietverbindung
- SRBV -: Schließringbolzenverbindung
- SV -: Schraubverbindung
- VQA -: vertikale Querachse
- ZR -: Zugrichtung

## Patentansprüche

1. Karosseriebauteil, insbesondere ein Träger für ein landgestütztes Fahrzeug, das ein Rohr (7) umfasst mit einer die Rohrwand (12) zweimal durchstoßenden Querbohrung (8), wobei in der Querbohrung (8) ein Zugelement (11) angeordnet ist, das an seinen Enden (11a, 11b) mit der Rohrwand (12) verbunden ist.

2. Karosseriebauteil nach dem vorhergehenden Anspruch, **dadurch gekennzeichnet, dass** das Zugelement (11) ein Stab ist.

3. Karosseriebauteil nach einem der vorhergehenden Ansprüche, **dadurch gekennzeichnet, dass** das Zugelement (11) vorgespannt ist.

4. Karosseriebauteil nach einem der vorhergehenden Ansprüche, **dadurch gekennzeichnet, dass** das Zugelement (11) zumindest abschnittsweise hohl ist.

5. Karosseriebauteil nach einem der vorhergehenden Ansprüche, **dadurch gekennzeichnet, dass** das Zugelement (11) an einem Ende (14) eine Verbreiterung (15, 19) aufweist.

6. Karosseriebauteil nach einem der vorhergehenden Ansprüche, **dadurch gekennzeichnet, dass** das Zugelement (11) an einem Ende (14, 16) eine Schraubverbindung (SV) aufweist.

7. Karosseriebauteil nach einem der vorhergehenden Ansprüche, **dadurch gekennzeichnet, dass** das Zugelement (11) an einem Ende (14, 16) eine Nietverbindung (NV) aufweist.

8. Karosseriebauteil nach einem der vorhergehenden Ansprüche, **dadurch gekennzeichnet, dass** das Zugelement (11) an einem Ende (16) eine Druckhülsenverbindung (DHV) aufweist.

9. Karosseriebauteil nach einem der vorhergehenden Ansprüche, **dadurch gekennzeichnet, dass** das Zugelement (11) an einem Ende (16) eine Schließringbolzenverbindung (SRBV) aufweist.

10. Karosseriebauteil nach einem der vorhergehenden Ansprüche, **dadurch gekennzeichnet, dass** das Zugelement (11) an einem Ende (16) mit der Rohrwand (12) verschweißt und/oder verklebt ist.

11. Karosseriebauteil nach einem der vorhergehenden Ansprüche, **dadurch gekennzeichnet, dass** das Zugelement (16) ein Spannstift ist, der in die Querbohrung (8) eingeschlagen ist.

12. Fahrzeug mit einem Karosseriebauteil nach einem der Ansprüche 1 bis 11, **dadurch gekennzeichnet, dass** das Rohr (7) in Längsrichtung des Fahrzeugs ausgerichtet ist.

13. Fahrzeug mit einem Karosseriebauteil nach einem der Ansprüche 1 bis 11, **dadurch gekennzeichnet, dass** das Rohr (7) in einer Querrichtung des Fahrzeugs ausgerichtet ist.

14. Fahrzeug nach einem der beiden vorhergehenden Ansprüche, **dadurch gekennzeichnet, dass** ein Zugelement (11) parallel zur Fahrzeughochachse ausgerichtet ist.

15. Verfahren zur Herstellung eines Karosseriebauteils nach einem der Ansprüche 1 bis 11, **gekennzeichnet durch** die folgenden Schritte:
• Bereitstellen eines Rohres (7),
• Bohren einer Querbohrung (8) in das Rohr (7),
• Einfädeln eines Zugelements (11) in die Querbohrung (8) und
• Herstellen einer Verbindung (SV, NV, DHV, SRBV) an einem Ende (14, 16) des Zugelements (11).

16. Verfahren nach dem vorhergehenden Anspruch, **dadurch gekennzeichnet, dass** die zum Einfädeln des Zugelements (11) eine Positionierhilfe (24) verwendet wird.

17. Verfahren einem der beiden vorhergehenden Ansprüche, **dadurch gekennzeichnet, dass** das Zugelement (11) vor oder bei dem Herstellen der Verbindung (SV, NV, DHV, SRBV) vorgespannt wird.

18. Verfahren einem der drei vorhergehenden Ansprüche, **dadurch gekennzeichnet, dass** beim Herstellen der Verbindung (SV, NV, DHV, SRBV) an einem Ende (14) des Zugelements (11) eine Haltevorrichtung (20) verwendet wird.
